# EUROPÄISCHE PATENTSCHRIFT

(11) **EP 3 259 097 B1**
(45) Veröffentlichungstag und Bekanntmachung des Hinweises auf die Patenterteilung: **06.11.2024**
(21) Anmeldenummer: 16708368.2
(22) Anmeldetag: 19.02.2016
(51) Int. Cl.: B23P 21/00, B23P 23/06, B62D 65/02, G05B 19/418

(54) **FERTIGUNGSANLAGE UND VERFAHREN**
MANUFACTURING PLANT AND METHOD
INSTALLATION DE FABRICATION ET PROCÉDÉ

(30) Priorität: 19.02.2015 DE 202015100782 U; 12.03.2015 DE 102015103642; 27.11.2015 DE 202015106459 U
(43) Veröffentlichungstag der Anmeldung: 27.12.2017
(73) Patentinhaber: KUKA Systems GmbH, 86165 Augsburg (DE)
(72) Erfinder: THORWARTH, Paul, 86154 Augsburg (DE)
(74) Vertreter: Ernicke, Klaus Stefan
(86) Internationale Anmeldenummer: PCT/EP2016/053574
(87) Internationale Veröffentlichungsnummer: WO 2016/131968

(56) Entgegenhaltungen:
- EP-A1- 1 120 189
- EP-A1- 2 100 804
- DE-A1- 102008 009 995
- FR-A1- 2 757 819
- JP-A- 2006 127 309
- US-A- 4 894 908
- US-A1- 2007 024 463
- US-B1- 6 519 837

## Beschreibung

Die Erfindung betrifft eine Fertigungsanlage und ein Verfahren mit den Merkmalen den Oberbegriffen der Verfahrens- und Vorrichtungshauptansprüche.

Aus der DE 10 2008 009 995 A1 wird ein solches Verfahren und eine solche Vorrichtung offenbart, insbesondere ist eine als Robotergarten ausgebildete Fertigungsanlage für den Rohbau von Fahrzeugkarosserien bekannt, bei der zugeführte typverschiedene Werkstücke bzw. Karosserieteile von jeweils von einer robotergeführten, typspezifischen Greifeinrichtung aufgenommen werden und mit dieser bei der Werkstückbearbeitung durch Schweißroboter und beim Transport dauerhaft als eine Einheit verbunden bleiben. Handlingroboter handhaben und transportieren die Einheit in einer Roboterzelle und geben sie über Ablagetische an die nächste Roboterzelle weiter. Die Greifeinrichtungen weisen jeweils ein eigenes Netzwerk mit einem Codegeber zur Identifizierung der betreffenden Greifeinrichtung auf. Die FR 2 757 819 A2 zeigt eine Fertigungsanlage für den Rohbau von typverschiedenen Fahrzeugkarosserien, bei der die typspezifischen Werkstücke auf typspezifischen und mit einer Typenkennung versehenen Paletten aufgenommen und auf einem ringförmigen Bahnförderer durch mehrere, fest verkettete Fertigungszonen nacheinander transportiert werden. Die Bearbeitung bzw. das Schweißen der Werkstücke erfolgt auf der gleichen Palette, die bereits die benötigten Werkstücke enthält.

Die US 4 894 908 A befasst sich mit einer Assemblieranlage für Kupplungen, in der typgleiche Paletten zirkulieren und von Robotern mit extern zugeführten Kupplungsteilen beladen werden.

Aus der Praxis sind ferner Fertigungsanlagen für den Rohbau von Fahrzeugkarosserien bekannt, bei denen der Fertigungsbereich sich in zwei oder mehr getrennte Linien gliedert, in denen Fertigungszellen fördertechnisch fest miteinander verkettet sind. Die Abfolge der Fertigungsschritte und der daran beteiligten Fertigungszellen ist fest vorgegeben. Der Werkstücktransport von Zelle zu Zelle erfolgt meist über Handlingroboter. Diese Fertigungsanlagen können für verschiedene Typen von Fahrzeugkarosserien flexibel gestaltet werden, wobei die feste Verkettung erhalten bleibt.

Es ist Aufgabe der vorliegenden Erfindung, eine verbesserte Fertigungstechnik aufzuzeigen.

Die Erfindung löst diese Aufgabe mit den Merkmalen in den selbstständigen Verfahrens- und Vorrichtungshauptansprüchen.

Die beanspruchte automatisierte Fertigungstechnik, d.h. die Fertigungsanlage und das Fertigungsverfahren, zeichnen sich durch eine hohe Flexibilität aus. Zudem ergeben sich verbesserte Auslastungs- und Optimierungsmöglichkeiten sowie eine gesteigerte Wirtschaftlichkeit.

Die in der Fertigungsanlage angeordneten ein oder mehreren Fertigungseinrichtungen können eigenständig einen Bearbeitungsprozess anhand einer lokal erfassten Typenkennung eines Lastaufnahmemittels durchführen. Sie sind dabei in der Lage, je nach Typ des Lastaufnahmemittels unterschiedliche Bearbeitungsprozesse auszuführen. Hierfür können auch unterschiedliche applikationsspezifische Werkzeuge eingesetzt werden. Die Fertigungseinrichtungen und die dort ausgeführten Bearbeitungsprozesse können ferner bedarfsweise schnell umgerüstet werden.

Die verschiedenen Typenkennungen korellieren mit den unterschiedlichen Werkstücken. Die Zuordnung ist frei wählbar und kann geändert werden. Anhand des erfassten Typs von Lastaufnahmemittel kennt die Steuerung auch das jeweilige Werkstück. Über das Lastaufnahmemittel kann das Werkstück exakt und bearbeitungsgerecht positioniert werden. Innerhalb einer Fertigungsanlage können mindestens zwei verschiedenartige Lastaufnahmemittel eingesetzt werden. Vorzugsweise wird eine Vielzahl unterschiedlicher Typen verwendet. Innerhalb einer größeren Fertigungsanlage können gleiche Typen an unterschiedlichen und räumlich sowie funktional getrennten Anlagenbereich eingesetzt werden.

In einer Ausgestaltung kann eine Typenkennungen als Codierung ausgebildet sein und außer der Typangabe weitere Informationen und Daten enthalten. Hierfür können mehrere Kennfelder vorhanden sein. Die zusätzlichen Informationen und Daten können eine Identitätsangabe des Lastaufnahmemittels und/oder eine Werkstück- oder Baumusterangabe und/oder eine Kennung der zuletzt besuchten Fertigungseinrichtung bzw. Fertigungszelle beinhalten.

In den Fertigungseinrichtungen kann eine Bearbeitung und eine Handhabung von mehrteiligen Werkstücken bzw. Baugruppen erfolgen. Dies umfasst ein Anheben und Lösen eines Werkstücks vom Lastaufnahmemittel zur weiteren Bearbeitung in Schwebelage und kann ein Assemblieren von Werkstückteilen beinhalten. Die Werkstückbearbeitung kann auch auf dem Lastaufnahmemittel stattfinden, das hierfür in geeigneter Weise mitsamt Werkstück in einer vorgegebenen Position positioniert werden kann. Das Lastaufnahmemittel kann dabei mit dem Fördermittel verbunden bleiben oder von diesem getrennt werden.

Ferner erfolgt ein Umladen eines Werkstücks von einem Lastaufnahmemittel auf ein anderes, im Typ gleiches oder unterschiedliches Lastaufnahmemittel.

Erfindungsgemäß ist in der Fertigungsanlage eine automatische Fertigungseinrichtung für Werkstücke, insbesondere für Karosseriebauteile, vorgesehen, die zumindest ein programmgesteuertes Fertigungsmittel und einen Bearbeitungsbereich aufweist, wobei an einem zur sequenziellen Aufnahme von mindestens zwei voneinander verschiedenartigen Lastaufnahmemitteln ausgelegten Bearbeitungsbereich ein Fertigungsmittel angeordnet ist, das zum Handhaben eines Werkstücks, zum schwebenden Halten des Werkstücks beim Bearbeitungsprozess, und zum Umladen des Werkstücks auf ein anderes Lastaufnahmemittels eines gleichen oder anderen Typs (A,B,C,D) ausgebildet ist.

Ferner betrifft die Erfindung ein Verfahren zum Bearbeiten von Werkstücken, insbesondere Karosseriebauteilen, in einer automatischen Fertigungseinrichtung, die zumindest ein programmgesteuertes Fertigungsmittel und einen Bearbeitungsbereich aufweist, mit den folgenden Verfahrensschritten:
Aufnehmen des Werkstückes durch zumindest ein Fertigungsmittel von einem ersten Lastaufnahmemittel, Verlagern des ersten Lastaufnahmemittels aus dem Bearbeitungsbereich der ersten Fertigungseinrichtung, Verlagern eines zweiten Lastaufnahmemittels, welches von dem ersten Lastaufnahmemittel verschiedenartig ist, in den Bearbeitungsbereich der ersten Fertigungseinrichtung und Ablegen des Werkstücks auf das zweite Lastaufnahmemittel. Das Verfahren umfasst auch das vorgenannte schwebende Halten des Werkstücks beim Bearbeitungsprozess und das Umladen des Werkstücks auf ein anderes Lastaufnahmemittels eines gleichen oder anderen Typs (A,B,C,D).

Das Umladen kann direkt oder über eine Zwischenablage am Bearbeitungsbereich erfolgen. Hier kann auch eine Werkstückbearbeitung erfolgen.

Die verbindende Fördertechnik kann in die Fertigungseinrichtung verlagert und vereinfacht sowie im Aufwand reduziert werden. Die Lastaufnahmemittel können im Fertigungsablauf gewechselt werden, wobei zusammen mit dem zweiten oder weiteren Lastaufnahmemittel ein weiteres bereits bearbeitetes Werkstück oder neue Werkstückteile zugeführt werden können. Zudem können die Lastaufnahmemittel bzw. die Fördereinrichtung vom Bearbeitungsprozess zumindest zeitweise entkoppelt und besser ausgelastet werden. Das Umladen von Werkstücken zwischen gleichen oder verschiedenartigen Lastaufnahmemitteln in einer Fertigungseinrichtung, insbesondere an einem dortigen Bearbeitungsbereich und mit dem oder den dort vorhandenen Fertigungsmittel(n), hat die besagte eigenständige erfinderische Bedeutung. Dies kann auch ohne eine Typenkennung und deren Erfassung eingesetzt werden.

Die Fertigungseinrichtung kann für einen Primärprozess ausgelegt sein und kann mit einer weiteren Fertigungseinrichtung für einen Sekundärprozess an einem Werkstück verbunden sein. Die weitere Fertigungseinrichtung dient als verlängerte Werkbank. Hier können z.B. Prozesse durchgeführt werden, die in der applikationsflexiblen Fertigungseinrichtung nicht oder nur schwer machbar sind. Mehrere weitere Fertigungseinrichtung können in einer Quadranten-Matrix mit der primären Fertigungseinrichtung verbunden sein. Zudem kann durch eine Diversifizierung und eine gleichzeitige Durchführung mehrerer Prozesse Taktzeit gespart und die Fertigungsleistung erhöht werden. Der Werkstückwechsel kann über Schnittstellen am Randbereich der Fertigungseinrichtungen erfolgen. Die Schnittstellen können sich an einer die jeweilige Fertigungseinrichtung umgebenden Schutzabtrennung befinden. Die auf dem Förderweg befindlichen Schnittstellen können als Schleusen für leere und beladene Fördermittel in der Schutzabtrennung ausgebildet sein.

Die beanspruchte Fertigungstechnik erlaubt eine dezentrale Steuerung einer Fertigungsanlage und eine Reduzierung und Flexibilisierung des Steuerungsaufwands. Zudem können Umrüstungen der Fertigungsanlage und eines Fertigungsablaufs sowie die Integration weiterer Werkstücke, Bearbeitungsprozesse und Fertigungsabläufe schnell und aufwandsarm erfolgen. Eine bisher übliche alle Prozesse umfassende Gesamt-Anlagensteuerung kann entfallen.

Die Fertigungseinrichtungen, vorzugsweise in Form von Fertigungszellen, sind selbst hochflexibel und können für unterschiedlichste Werkstücke und Applikationen, z.B. Fügeprozesse, insbesondere Schweiss-, Löt- oder Klebeprozesse, Umformprozesse, Montageprozesse, Auftragprozesse oder dgl., eingesetzt werden. Die hierfür erforderlichen applikationsspezifischen Werkzeuge können in einer externen Bereitstellung vorgehalten und mittels einer Fördereinrichtung bedarfsweise zu den Fertigungseinrichtungen für deren automatische werkzeugtechnische Ausrüstung und Umrüstung gebracht werden. Die gleiche Fördereinrichtung kann auch zum Transport der Werkstücke benutzt werden.

Die automatisierte Fertigungsanlage hat eine flexible und bedarfsweise umgestaltbare fördertechnische Verkettung der Fertigungseinrichtungen einerseits untereinander und andererseits mit Bereitstellungen, insbesondere für verschiedene applikationsspezifische Werkzeuge und für unterschiedliche Werkstücke.

Die hochflexible Fördereinrichtung kann in beliebig geeigneter Weise ausgebildet sein. Vorzugsweise umfasst sie eine Vielzahl von autonomen und individuell steuerbaren Fördermitteln, die sich auf einer Vielzahl von verschiedenen Förderwegen bewegen. Vorzugsweise ist ein Netz von Förderwegen vorhanden, auf denen die Fördermittel auf vorgegebenen Förderbahnen zwischen den Fertigungseinrichtungen und den Bereitstellungen verkehren, wobei die Förderbahnen frei wählbar und programmierbar sind. Die Fördereinrichtung ist außerdem hinsichtlich der Transportmöglichkeiten für applikationsspezifische Werkzeuge und für Werkstücke flexibel. Hierfür sind adaptierte Lastaufnahmemittel vorgesehen, die mit den Fördermitteln fest oder wechselbar verbunden sind. Die Fördermittel und/oder die Lastaufnahmemittel können ebenfalls in einer oder mehreren Bereitstellungen magaziniert werden und bei Bedarf abgerufen und eingesetzt werden.

Das Bearbeiten eines ein- oder mehrteiligen Werkstücks kann in einem Fertigungsablauf und einer Abfolge von mehreren Fertigungsschritten bzw. Fertigungssegmenten erfolgen, wobei die Fertigungsschritte jeweils autonom in den Fertigungseinrichtungen einer Fertigungsanlage vom jeweils ausgewählten Steuerprogramm gesteuert werden und der Fertigungsablauf von einem Warehouse-Manager der Fertigungsanlage über die Verlagerung der Lastaufnahmemittel bzw. die Fördereinrichtung gesteuert wird.

Vorzugsweise ist die Vielzahl der Steuerprogramme in einem Speichermittel der Steuereinrichtung gespeichert, insbesondere in genau einem Speichermittel. Weiter vorzugsweise umfasst die Vielzahl der Steuerungsprogramme für zumindest zwei Typen der Lastaufnahmemittel zumindest ein Steuerungsprogramm. Mit anderen Worten enthält das Speichermittel zumindest zwei Steuerungsprogramme und zwar für jedes der zumindest zwei Typen der Lastaufnahmemittel zumindest ein Steuerungsprogramm. Beispielsweise kann ein erstes Steuerungsprogramm vorgesehen sein, um das zumindest eine Fertigungsmittel zur Bearbeitung bzw. Behandlung eines ersten Typen von Lastaufnahmemittel zu steuern und ein zweites Steuerungsprogramm ist vorgesehen, um das zumindest eine Fertigungsmittel zur Bearbeitung bzw. Behandlung eines zweiten Typen von Lastaufnahmemittel zu steuern. Es versteht sich, dass das Speichermittel auch zwei oder mehr Steuerungsprogramme zur Bearbeitung bzw. Behandlung bzw. Handhabung eines einzelnen Typen eines Lastaufnahmemittels aufweisen kann. Des Weiteren kann das Speichermittel zu allen Typen des Lastaufnahmemittels zumindest ein Steuerungsprogramm aufweisen.

In einer Ausführungsform ist vorgesehen, dass zumindest einer Fertigungseinrichtung ein Parkbereich für Lastaufnahmemittel zugeordnet und vorgeschaltet ist. Der Parkbereich kann als Pufferspeicher und außerdem für eine Sequenzheilung eingesetzt werden, wenn mehrere verschiedenartige Lastaufnahmemittel die Fertigungseinrichtung in einer vorgegebenen Sequenz ansteuern sollen und in der falschen Reihenfolge ankommen. Dies ist insbesondere bei einem Umladen eines Werkstücks am Bearbeitungsbereich vom einen auf das andere Lastaufnahmemittel von Vorteil.

Eine Ausgestaltung sieht vor, dass die verschiedenartigen Lastaufnahmemittel jeweils in einem eigenen Fertigungs-Loop auf einer programmierten, vorzugsweise ringförmigen Förderbahn transportiert werden. Der Fertigungs-Loop kann sich über eine oder mehrere zugeordnete Fertigungseinrichtungen und ggf. über eine Bereitstellung für Werkstücke und/oder Werkzeuge und/oder LAM erstrecken. Der Fertigungs-Loop kann z.B. mit einem Fertigungsablauf für ein Werkstück und den hierbei vorgesehenen Fertigungsschritten zur Herstellung eines Fertigungs- oder Zwischenprodukts korrespondieren. Eine Loop-Bildung vereinfacht den fördertechnischen und programmiertechnischen Aufwand und verkürzt die Förderstrecken. Auf einem Fertigungs-Loop können ein oder mehrere Fördermittel verkehren. Einer Bereitstellung für Werkstücke kann ein Pufferspeicher für beladene Lastaufnahmemittel zugeordnet und ggf. in einen Fertigungs-Loop eingebunden sein. Die Bearbeitungs- und Ladezeiten können entkoppelt und die Zahl der Fördermittel für den Transport der Lastaufnahmemittel reduziert werden.

Die automatische Fertigungstechnik hat besondere Vorteile für der Rohbau von Fahrzeugkarosserien. Sie lässt sich auch in anderen technischen Bereichen mit Erfolg einsetzen.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen
- Figur 1:: eine Schemadarstellung einer Fertigungsanlage mit einem Fertigungsbereich und mehreren Bereitstellungen,
- Figur 2:: eine Schemadarstellung einer Steuerungshierarchie,
- Figur 3:: eine Schemadarstellung einer Fertigungseinrichtung,
- Figur 4:: eine beispielhafte Darstellung eines Fertigungsbereichs mit mehreren Fertigungseinrichtungen und Bereitstellungen,
- Figur 5:: ein anderes Beispiel eines Fertigungsbereichs mit Bereitstellungen für die werkzeugtechnische Ausund Umrüstung von Fertigungseinrichtungen,
- Figur 6:: eine andere ausschnittsweise Darstellung des Fertigungsbereichs von Figur 5 für den Bearbeitungsbetrieb mit einer Bereitstellung für Werkstücke,
- Figur 7:: eine weitere Variante einer Fertigungsanlage,
- Figur 8:: einen Fertigungsablauf mit Segmentierung, Sequenz und Dezentralisierung
- Figur 9:: ein Steuerkonzept zum Fertigungsablauf von Figur 8,
- Figur 10:: das Steuerkonzept von Figur 9 mit einer Werkzeugversorgung,
- Figur 11:: eine weitere Variante einer Fertigungsanlage,
- Figur 12:: einen Baustein in einem Steuer- und Fertigungsablauf,
- Figur 13:: einen anderen Baustein in einem Steuer- und Fertigungsablauf mit einem Parkbereich und
- Figur 14:: eine weitere Variante einer Fertigungsanlage.

Die Erfindung betrifft eine Fertigungsanlage (1) und ein Fertigungsverfahren für Werkstücke (2,2'). Die Erfindung betrifft ferner eine Fertigungseinrichtung (18-22) für Werkstücke (2,2') und dort ablaufende Fertigungsprozesse.

Die Fertigungsanlage (1) und ihre Komponenten, insbesondere die Fertigungseinrichtungen (18-22), sind automatisiert und programmgesteuert.

Die Werkstücke (2,2') können von beliebiger Art und Größe sein. Sie können einteilig oder mehrteilig sein. Vorzugsweise handelt es sich um Karosseriebauteile von Fahrzeugkarosserien. Die Fertigungsanlage (1) kann z.B. für den Rohbau von Fahrzeugkarosserien eingesetzt werden. Die Werkstücke (2) und (2') sind unterschiedlich ausgebildet.

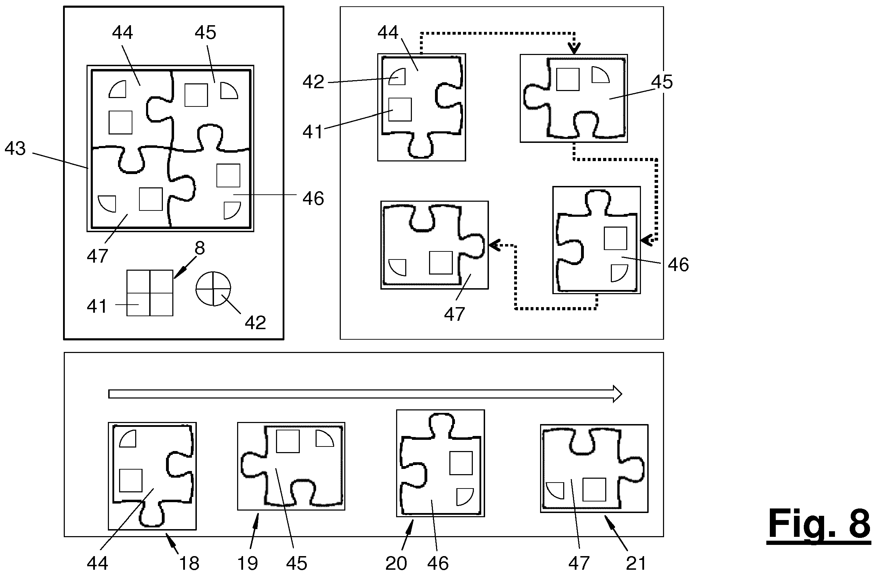

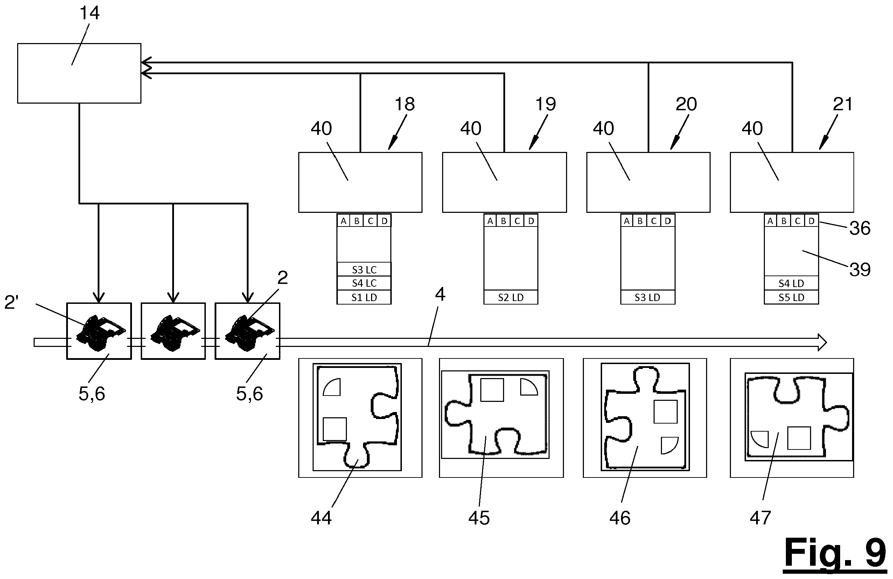

Im Zuge des automatischen Fertigungsverfahrens können gemäß Figur 8 bis 10 ein oder mehrere Werkstücke (2,2') in einer Folge von Fertigungsschritten (44-47) mit unterschiedlichen Fertigungsprozessen bearbeitet werden. Die Schrittzahl richtet sich nach dem Prozessvolumen, der Auslastung, Taktvorgaben und anderen Kriterien. Hierbei wird z.B. im Rohbau durch Assemblieren und Fügen von Werkstückteilen ein Fertigungs-Produkt (43), insbesondere eine Karosserie-Baugruppe, erzeugt. Dies kann ein Zwischenprodukt sein, aus dem mit weiteren Prozessen, z.B. Verbindung mit weiteren Werkstückteilen oder anderweitig gefertigten Zwischenprodukten, ein Endprodukt erzeugt wird. Die Fertigungsschritte (44-47) werden bevorzugt in einer Abfolge nacheinander in mehreren Fertigungseinrichtungen (18-22) durchgeführt. Hierbei werden gemäß Figur 8 und 9 in einem Fertigungsschritt (44-47) jeweils ein oder mehrere Prozess-Segmente ausgeführt.

Diese Fertigungsprozesse können unterschiedliche Techniken betreffen, z.B. Fügen, insbesondere Schweissen, Löten oder Kleben, Auftragen und Abtragen von Materialien, Wärmebehandlungen, Umformen, spanabhebende Bearbeitung, Assemblier- und Montagevorgänge oder dgl..

Die Fertigungsanlage (1), das Fertigungsverfahren und die Fertigungseinrichtungen (18-22) sind flexibel und applikationsspezifisch adaptierbar. Mit einer Applikationsspezifizierung wird eine Anpassung an unterschiedliche Fertigungsprozesse und/oder an unterschiedliche Werkstücke (2,2') bezeichnet.

Für diese verschiedenen Prozesse werden verschiedene applikationsspezifische Werkzeuge (8) benötigt. Die applikationsspezifischen Werkzeuge (8) können Einzelwerkzeuge oder Satzwerkzeuge sein. Sie können gemäß Figur 8 aus mehreren Toolsegmenten (41) bestehen.

Nachfolgend werden die applikationsspezifischen Werkzeuge (8) der Einfachheit halber als Werkzeuge (8) bezeichnet.

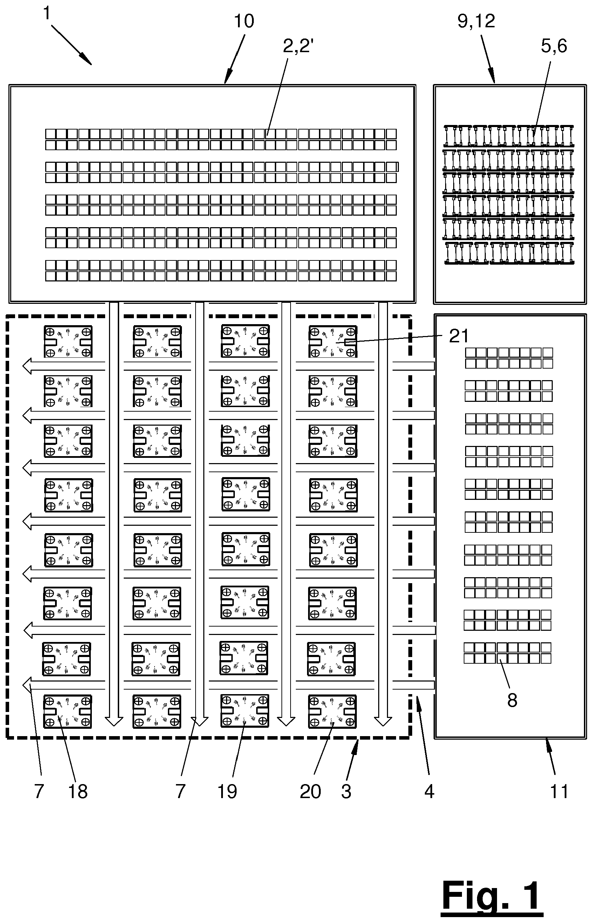

Figur 1 zeigt eine Schemadarstellung einer Fertigungsanlage (1) und ihrer Komponenten. Die Fertigungsanlage (1) weist einen Fertigungsbereich (3) mit mehreren darin angeordneten Fertigungseinrichtungen (18-22) auf. Ferner besitzt die Fertigungsanlage (1) eine Bereitstellung (10) für Werkstücke (2,2') und eine Bereitstellung (11) für verschiedene besagte Werkzeuge (8) auf. Ferner ist eine Fördereinrichtung (4) vorhanden, welche die Fertigungseinrichtungen (18-22) untereinander und mit den bevorzugt externen Bereitstellungen (10,11) flexibel verbindet. Die Bereitstellungen (10,11) werden auch als Warehouse (10) und als Toolstore (11) bezeichnet.

Die Fördereinrichtung (4) kann in beliebig geeigneter Weise ausgebildet sein. In den gezeigten Ausführungsformen weist sie eine Vielzahl von autonomen und individuell steuerbaren Fördermitteln (5) sowie eine Vielzahl von Förderwegen (7) auf, auf denen die Fördermittel (5) verkehren. Die Förderwege (7) sind vorzugsweisen in einem Netz angeordnet und kreuzen sich mehrfach.

Ein Förderweg (7) kann sich jeweils durch eine Fertigungseinrichtung (18-22) hindurch erstrecken. Mehrere durchgängige Förderwege (7) können aneinander anschließen und zusammen eine Förderlinie (70) bilden.

Die Fördermittel (5) sind bevorzugt autonom und individuell steuerbar sowie ggf. lenkbar. Sie sind z.B. als flurgebundene fahrerlose Transportfahrzeuge, sog. AGV oder FTF, ausgebildet. Sie können Kurven fahren oder ggf. auch auf der Stelle wenden. Sie können sich ggf. auch omnidirektional bewegen, z.B. mittels Mecanum-Rädern. Alternativ können die Fördermittel (5) hängend angeordnet sein und z.B. an aufgeständerten Förderschienen mit Weichen fahren. Sie können ferner als Rollen- oder Bandförderer ausgebildet sein. Die Fördereinrichtung (4) kann mehrere unterschiedliche Fördermittel (5) aufweisen.

Die Fördermittel (5) verkehren im Netz der Förderwege (7) und Förderlinien (70,71) auf frei programmierbaren Förderbahnen. Die Förderlinien (70,71) können in entgegen gesetzten Richtungen befahren werden. Sie können auch als Einbahnstraßen mit entgegengesetzter und durch Pfeile angedeuteter Fahrtrichtung ausgebildet sein. Durch die Querverbindungen, insbesondere den oder die Zufahrtskorridore (66), können Förderloops (48,49) gebildet werden, die auch Fertigungsloops unter Verkettung von mehreren Fertigungseinrichtungen (18-22) schaffen. Die Fertigungs- bzw. Förderloops (48,49) können einander überschneiden.

An den ein oder mehreren Zufahrtskorridoren (66) können die Fördermittel (5) wahlweise entlang des Förderwegs (7) bzw. der Förderlinie (70) von einer in die andere Fertigungseinrichtung (18-22) weiterfahren oder auf der Querverbindung abbiegen und zu einer anderen Förderlinie (71) fahren. Das Abbiegen kann durch eine eigene Lenkbewegung des Fördermittels (5), durch Umsetzen mittels einer Drehscheibe oder auf andere Weise erfolgen.

Im Zufahrtskorridor (66) bzw. der Querverbindung kann ein Parkbereich (53) für das temporäre Abstellen eines leeren oder beladenen Fördermittels (5) gebildet werden. Hierdurch können Pufferspeicher für die Kompensation von Taktzeitunterschieden oder Störungsphasen oder auch für eine Sequenzheilung oder andere Zwecke gebildet werden.

Die Fördermittel (5) haben in den verschiedenen Ausführungsformen vorzugsweise jeweils einen eigenen individuell steuerbaren Antrieb und eine eigene programmierbare Steuerung. Die Energieversorgung kann auf beliebig geeignete Weise erfolgen, z.B. durch eine stationäre oder instationäre Energieversorgungseinrichtung (33) .

Für den Transport von Werkstücken (2,2') und/oder Werkzeugen (8) von den Bereitstellungen (10,11) zum Fertigungsbereich (3) und zurück sowie im Fertigungsbereich (3) zwischen den Fertigungseinrichtungen (18-22) tragen die Fördermittel (5) jeweils ein oder mehrere adaptierte Lastaufnahmemittel (6). Diese werden nachfolgend abgekürzt als LAM bezeichnet.

Die LAM (6) können fest oder wechselbar auf einem Fördermittel (5) angeordnet sein. Die LAM (6) können eine feste Adaption für bestimmte Werkstücke (2,2') und/oder Werkzeuge (8) aufweisen. Sie können alternativ flexibel bzw. verstellbar und unterschiedlich adaptierbar ausgebildet sein. Die LAM (6) können unterschiedliche angepasste Aufnahmen und Haltemittel für die Werkstücke (2,2') und/oder Werkzeuge (8) aufweisen und diese in einer definierten Position halten. Die LAM (6) können z.B. als Basis einen platten- oder rahmenförmigen Träger aufweisen.

Mehrere LAM (6) sind verschiedenartig ausgebildet und bilden verschiedene Typen (A,B,C,D). Sie können dabei an unterschiedliche Werkstücke (2,2') adaptiert sein. Ein verstellbares LAM (6) kann zwei oder mehr verschiedene Typen bilden. Die Zahl der verschiedenen LAM-Typen (A,B,C,D) kann beliebig hoch sein. Sie beträgt zwei, drei, vier oder mehr. Die Zahl kann von dem in der Fertigungsanlage (1) zu fertigenden Prozessvolumen abhängen, insbesondere von der Zahl der unterschiedlichen Werkstücke (2,2'). Für die Werkzeuge (8) können weitere LAM-Typen vorhanden sein.

Die typverschiedenen LAM (6) haben eine Typkennung (37) für ihren jeweiligen Typ (A,B,C,D). Diese kann fest vorgegeben oder veränderbar sein. Ein verstellbares LAM (6) kann auch eine verstellbare Typkennung (37) aufweisen. Die Typkennung (37) kann informations- und steuertechnisch mit einem bestimmten Werkstück (2,2') verknüpft sein. Sie kann die Art des Werkstücks (2,2') und/oder Werkzeugs (8) repräsentieren. Vorzugsweise ist die Typkennung (37) unabhängig vom Zustand des Werkstücks (2,2') und/oder Werkzeugs (8) auf dem LAM (6). Bei einem Fertigungsablauf über mehrere Fertigungsschritte (44-47) ändert sich daher die Typkennung (37) nicht. Die Typkennung (37) kann allerding aus anderen Gründen geändert werden, z.B. bei einer technischen Umrüstung des LAM (6).

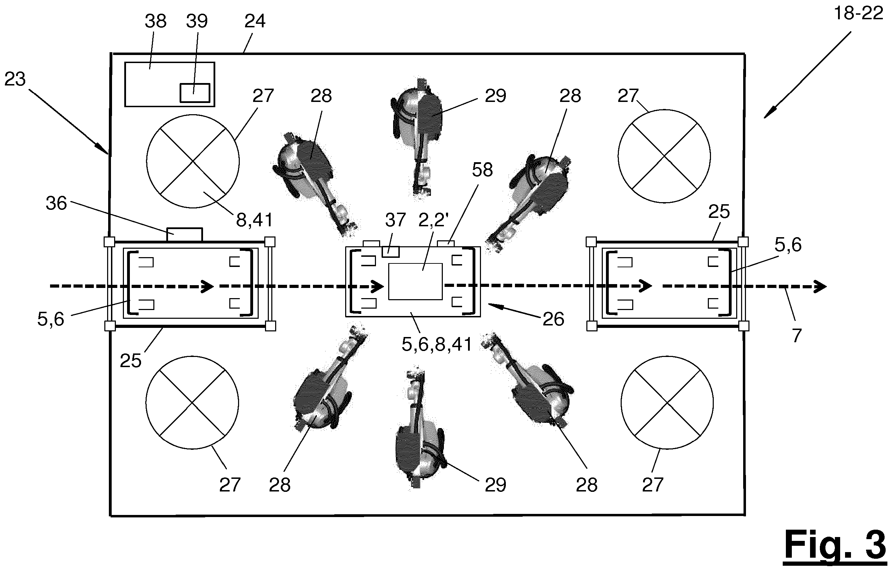

Die Typkennung (37) kann unterschiedlich ausgestaltet sein. Sie kann z.B. aus einer am LAM (6) angebrachten Codierung bestehen, die in beliebiger Weise ausgebildet sein kann, z.B. mechanisch, magnetisch, elektrisch, induktiv, insbesondere als RFID-Chip. Eine Codierung kann weitere Informationen enthalten, z.B. eine Identifizierungsnummer des LAM (6). Eine Typkennung (37) kann alternativ oder zusätzlich von einem Farb- oder Formmerkmal des LAM (6) gebildet werden. Figur 3 zeigt diese Anordnung.

Die Fertigungsanlage (1) weist eine mit der Fördereinrichtung (4) verbundene Bereitstellung (9) für die verschiedenen LAM (6) auf. Die Bereitstellungen (9,10,11) können gleichartig ausgebildet sein. Eine solche Bereitstellung (9,10,11) kann z.B. einen Lagerbereich (32) für Werkstücke (2,2') und/oder Werkzeuge (8) und/oder LAM (6) und einen mit der Fördereinrichtung (4) verbundenen Beladebereich (30) mit einer Beladeeinrichtung (31) aufweisen. Die Beladeeinrichtung (31) umfasst z.B. einen oder mehrere Laderoboter, die stationär angeordnet sind oder mittels einer Fahrachse entlange eines einzelnen oder einer Reihe von Fördermitteln (5) mit LAM (6) verfahrbar angeordnet sind.

Im Fertigungsbereich (3) sind die mehreren Fertigungseinrichtungen (18-22) in einer linienförmigen oder flächigen Verteilung angeordnet. Die Fördereinrichtung (4) ist dafür ausgelegt, zumindest einen Typ, insbesondere alle Typen (A,B,C,D), von Lastaufnahmemitteln (6) zu und von der oder den Fertigungseinrichtungen (18-22) zu verlagern. Die Fertigungseinrichtungen (18-22) sind mehrseitig von Förderwegen (7) umgeben. Ein Förderweg (7) erstreckt sich jeweils in und bevorzugt durch eine Fertigungseinrichtung (18-22). Die Fördermittel (5) mit den LAM (6) können dadurch in und vorzugsweise durch die einzelnen Fertigungseinrichtungen (18-22) fahren. Vorzugsweise sind die Fertigungseinrichtungen (18-22) in einer gleichmäßigen, insbesondere kartesischen Matrix verteilt angeordnet.

Zumindest mehrere Fertigungseinrichtungen (18-22) sind untereinander gleich ausgebildet. Vorzugsweise sind sie als einzelne Fertigungszellen (23) gestaltet. Alternativ ist eine andere, z.B. mehrzellige Ausbildung möglich. In Figur 3 ist eine zellenartige Fertigungseinrichtung (18-22) beispielhaft dargestellt.

Die gezeigte Fertigungseinrichtung (18-22), insbesondere Fertigungszelle (23), arbeitet automatisch. Sie weist eine einzelne, bevorzugt zentrale Arbeitsstelle bzw. einen Bearbeitungsbereich (26) und ein oder mehrere applikationsflexible Fertigungsmittel bzw. Fertigungsgeräte (28,29) auf. Alternativ können mehrere Arbeitsstellen bzw. Bearbeitungsbereiche (26) vorhanden sein. Der Bearbeitungsbereich (26) dient zur sequenziellen Aufnahme von zumindest zwei verschiedenartigen bzw. typverschiedenen LAM (6) und des jeweils mitgeführten Werkstücks (2,2') und/oder Werkzeugs (8).

Der Bearbeitungsbereich (26) befindet sich auf einem Förderweg (7), der sich in oder durch die Fertigungseinrichtung (18-22) (Sackgasse oder Durchfahrgasse) erstreckt. Dieser vorzugsweise gerade Förderweg (7) kann nur in einer oder bevorzugt in beiden Richtungen befahren werden. Die Fertigungseinrichtung (18-22) weist am Bearbeitungsbereich (26) eine in Figur 3 schematisch angedeutete Positioniereinrichtung (58) zur prozessgerechten Positionierung des LAM (6) und/oder des Fördermittels (5) auf. Hiermit erfolgt auch eine exakte Positionierung von ein oder mehreren mitgeführten Werkstücken (2) und/oder von ein oder mehreren mitgeführten Werkzeugen (8).

Die Positioniereinrichtung (58) kann mechanisch auf das LAM (6) und/oder das Fördermittel (5) einwirken. In anderen Ausführungsvarianten kann eine Positioniereinrichtung (58) von taktil oder berührungslos erfassbaren Markierungen im Bereich des Förderwegs (7) gebildet werden, die vom Fördermittel (5) erfasst und für dessen programmgesteuerte und eigengetriebene Positionierung sorgen. In einer anderen Variante können in den Fahrweg einschwenkbare Anschläge für die Längs- und Seitenpositionierung des LAM (6) und/oder Fördermittels (5) vorhanden sein. Eine Positioniereinrichtung (58) kann auch steuerungstechnisch über die programmierte Steuerung des Fördermittels (5) und dessen integrierte Wegmessung bzw. Navigation gebildet werden.

Die Fertigungsmittel (28,29) können gleich oder unterschiedlich ausgebildet und jeweils einzeln oder mehrfach vorhanden sein. Zumindest ein Fertigungsmittel (29) dient zur Bearbeitung eines Werkstücks (2,2') im Bearbeitungsbereich (26), insbesondere auf dem LAM (6). Das Fertigungsmittel (29) kann zusätzlich auch ein Werkstück (2,2') handhaben. Vorzugsweise wird ein anderes zusätzliches Fertigungsmittel (28) zum Handhaben eines Werkstücks (2,2') eingesetzt.

Die Fertigungsmittel (28,29) sind z.B. um den Bearbeitungsbereich (26) verteilt angeordnet. Insbesondere befinden sie sich zu beiden Seiten des Bearbeitungsbereichs (26) und des Förderwegs (7). Die Fertigungsmittel (28,29) können stationär oder mittels einer Zusatzachse verfahrbar angeordnet sein. Die applikationsflexiblen Fertigungsmittel (28,29) sind vorzugsweise als mehrachsige und programmierbare Industrieroboter ausgebildet. Sie weisen an ihren Abtriebselementen, insbesondere ihren Handflanschen, eine automatische Wechselkupplung auf. Sie können hierdurch automatisch das benötigte Werkzeug (8) bzw. Toolsegment (41) aufnehmen, benutzen und bedarfsweise automatisch abgeben und wechseln. Alternativ kann ein Fertigungsmittel (29) in anderer Weise, z.B. als Werkzeugmaschine ausgebildet sein.

Die applikationsflexiblen Fertigungsmittel (28,29) sind vorzugsweise für verschiedene Aufgaben vorgesehen. Die Fertigungsmittel (29) weisen z.B. austauschbare applikationsspezifische Werkzeuge (8) für die Durchführung des jeweiligen Fertigungsprozesses auf, die z.B. als Fügewerkzeug, Umformwerkzeug oder dgl. ausgebildet sind. Diese Fertigungsmittel (29) sind z.B. als Schweissroboter ausgebildet. Die anderen Fertigungsmittel (28) tragen ebenfalls austauschbare applikationsspezifische Werkzeuge (8), die z.B. zum Handhaben der ein oder mehreren Werkstücke (2) beim Fertigungsprozess ausgebildet sind. Diese Werkzeuge (8) können Greifwerkzeuge sein. Die Fertigungsmittel (28) sind z.B. als Handlingroboter ausgebildet.

Beim Handhaben können Werkstückteile bewegt und z.B. assembliert werden. Ferner kann das Werkstück (2,2') vom LAM (6) gelöst werden. Es wird dabei abgehoben und in Schwebelage gehalten, wobei ggf. die Bearbeitung fortgesetzt wird. Das vom Werkstück (2,2') getrennte LAM (6) kann während der Weiterbearbeitung bewegt und aus der Fertigungseinrichtung (18-22) abtransportiert werden. Ferner wird das gelöste Werkstück (2,2') auf ein zweites, in den Bearbeitungsbereich (26) transportiertes LAM (6) abgelegt und umgeladen. Das zweite LAM (6) kann vom gleichen Typ oder von einem anderen Typ sein. Auf dem zweiten LAM (6) kann auch ein weiteres Werkstück zugeführt werden.

Die Fertigungseinrichtung (18-22), insbesondere die Fertigungszelle (23), weist einen oder mehrere Speicher (27) für die besagten Werkzeuge (8) auf. Die Speicher (27) können mehrere Aufnahmeplätze für verschiedene Werkzeuge (8) aufweisen. Sie können angetrieben und steuerbar sein. Sie können z.B. als Drehspeicher ausgeführt sein. Die Speicher (27) befinden sich jeweils im Arbeitsbereich eines Fertigungsmittels (28,29). Im gezeigten Ausführungsbeispiel sind vier Speicher (27) an den Eckbereichen angeordnet, die jeweils einem Fertigungsmittel (28) bzw. Handlingroboter, zugeordnet sind.

Ferner weist die Fertigungseinrichtung (18-22) gemäß Figur 3 eine Steuereinrichtung (38) mit einem Speichermittel (39) für eine Vielzahl von applikationsspezifischen und auf verschiedene LAM-Typen (A,B,C,D) adaptierten Steuerprogrammen (40) auf. Zumindest für zwei Typen (A,B), vorzugsweise für alle Typen (A,B,C,D) der LAM (6) sind Steuerprogramme vorhanden und gespeichert. Die Steuereinrichtung (38) ist an sich neutral und wird durch Zuweisung von nachfolgend erläuterten applikationsspezifischen Prozess-Segmenten zum Prozessmanager.

Die Fertigungseinrichtung (18-22) hat außerdem eine Erfassungsvorrichtung (36) für die Typenkennung (37). Die Erfassungsvorrichtung (36) kann Teil der Steuereinrichtung (38) sein. Die Erfassungsvorrichtung (36) kann innerhalb der Fertigungseinrichtung (18-22), bevorzugt am Eingangsbereich, angeordnet sein. Alternativ kann sie außerhalb und z.B. an einem Förderweg (7) angeordnet sein.

Die Steuereinrichtung (38) bestimmt anhand der durch die Erfassungsvorrichtung (36) erfassten Typenkennung (37) den Typ (A,B,C,D) des am Bearbeitungsbereich (26) befindlichen LAM (6). Die Erfassungsvorrichtung (36) kann einen optischen Sensor, einen elektromagnetischen Sensor, einen taktilen Sensor, einen elektrischen Sensor und/oder einen magnetischen Sensor aufweisen. Ein Sensor kann insbesondere als Antenne, als near field communication, als kapazitiver oder induktiver Sensor ausgebildet sein.

Die Fertigungseinrichtung (18-22) und ihre Fertigungsmittel (28,29) sowie evtl. weitere Einrichtungskomponenten haben eine applikationsneutrale Grundausbildung und werden durch Bestückung mit applikationsspezifischen Werkzeugen (8) und durch Umprogrammierung bzw. durch ein Steuerprogramm (40) an die jeweilige Applikation adaptiert. Durch diese Grundausbildung und die Bestückungs- und Adaptionsmöglichkeit sind sie applikationsflexibel.

Die Steuereinrichtung (38) wählt anhand des erfassten und bestimmten LAM-Typs (A,B,C,D) ein Steuerprogramm (40) aus der gespeicherten Programmvielzahl und führt es aus. Die Steuereinrichtung (38) ist hierzu mit dem mindestens einen Fertigungsmittel (28,29) verbunden und steuert dieses. Der Typenkennung (37) bzw. dem LAM-Typ ist ein bestimmtes Werkstück (2,2') zugeordnet. Das ausgewählte Steuerprogramm (40) ist auf die Bearbeitung dieses Werkstücks (2,2') adaptiert.

Die Fertigungseinrichtung (18-22), insbesondere die Fertigungszelle (23) kann ferner eine oder mehrere Versorgungseinrichtungen für Betriebsmittel, insbesondere elektrischen Strom, fluidische Medien oder dgl., sowie Hilfsvorrichtungen aufweisen. Ferner kann eine umgebende Schutzabtrennung (24), z.B. in Form eines Zaunes, vorhanden sein. In der Schutzabtrennung (24) können eine oder mehrere Schleusen (25) für den gesicherten Einlass und Auslass eines Fördermittels (5) mit LAM (6) auf dem Förderweg (7) vorhanden sein.

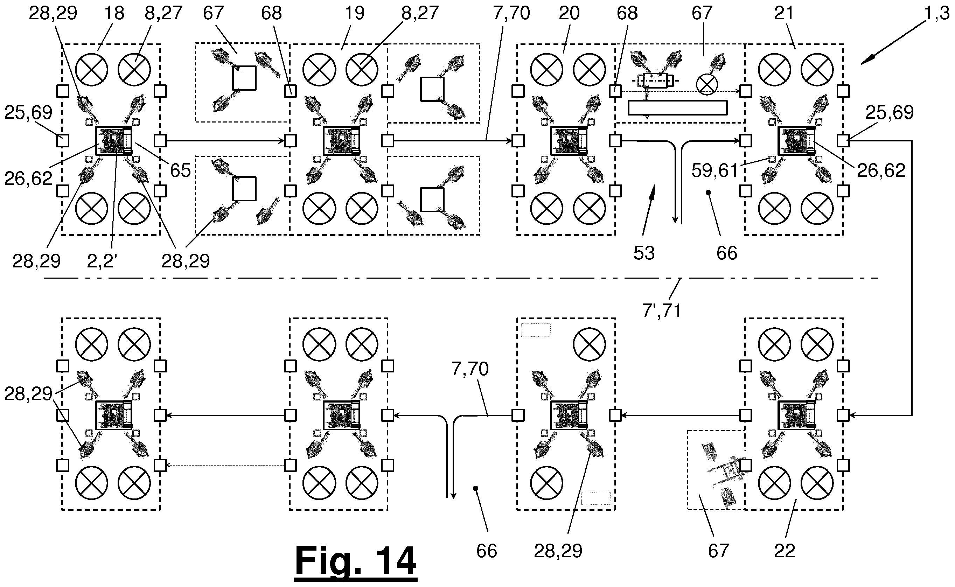

Wie Figur 14 verdeutlicht, können ein oder mehrere applikationsflexible Fertigungseinrichtungen (18-22) mit einer weiteren Fertigungseinrichtung (67) für einen Sekundärprozess an einem Werkstück (2,2") verbunden sein. Hierbei ist auch eine Mehrfachanordnung von solchen Fertigungseinrichtungen (67) möglich. Diese können seitlich neben oder auch oberhalb oder unterhalb einer Fertigungseinrichtung (18-22) angeordnet sein. In einer weiteren Fertigungseinrichtung (67) können ein oder mehrere programmgesteuerte Fertigungsmittel, insbesondere Industrieroboter, zum Handhaben und und Bearbeiten der Werkstücke (2,2") sowie weitere Vorrichtungen, z.B. stationäre Schweißzangen, Bolzensetzgeräte, Auftragegeräte für Klebstoff etc., angeordnet sein.

Der oder die in einer applikationsspezifischen Fertigungsstation (18-22) durchgeführten Primärprozess(e) sind vorzugsweise geometrie-spezifisch für das erwähnte Fertigungs-Produkt. Solche Prozesse können z.B. in einem Assemblieren, und in einem Fügen bestehen. Ein Fügeprozess kann durch Kleben (sogenannter Preprozess) oder einem geometriebestimmenden Punktschweißen oder Laserschweißen oder in einem Nieten oder Clinchen oder dgl. bestehen. Die ein oder mehreren Sekundärprozesse in einer weiteren Fertigungseinrichtung (67) können geometrie-unspezifisch sein. Sie können z.B. ein Fügen, Messen, formgebendes Bearbeiten, Schneiden oder dgl. umfassen. Bei einem Fügen können auch Zusatzteile, z.B. Bolzen oder dgl. angebracht werden. Ferner sind hard-codierte Sekundärprozesse möglich, die z.B. aus einem Lochen, Falzen, Bohren und/oder Fräsen oder dgl. bestehen.

Der Werkstückwechsel zwischen der applikationsspezifischen Fertigungseinrichtung (18-22) oder den ein oder mehreren weiteren Fertigungseinrichtungen (67) kann durch eine Schnittstelle (68) erfolgen, die z.B. an einem Durchlass einer Schutzabtrennung (24) angeordnet ist. Die weiteren Fertigungsbereiche (67) können ebenfalls von einer Schutzabtrennung (24) umgeben sein. Der Werkstückwechsel kann von einem programmgesteuerten Fertigungsmittel (28) insbesondere einem Handlingroboter, durchgeführt werden. Weitere Schnittstellen (69) können am Einlass und am bevorzugt gegenüber liegenden Auslass der Fertigungseinrichtung (18-22) angeordnet und z.B. von den Schleusen (25) gebildet werden.

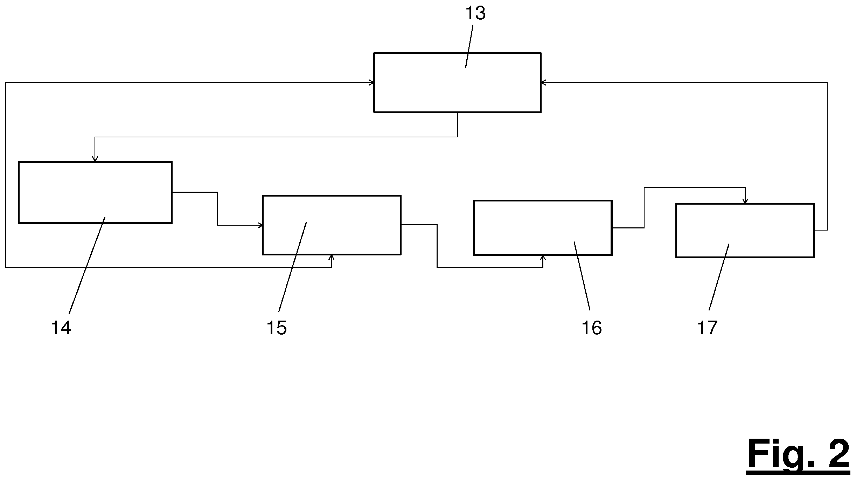

Die Fertigungsanlage (1) weist eine Steuerung (13) auf, die mit Steuereinheiten (14-17) für die Fertigungseinrichtungen (18-22), die Fördereinrichtung (4) und die Bereitstellungen (9,10,11) verbunden ist. Figur 2 zeigt beispielhaft eine solche Steuerungsarchitektur. Die zentrale Anlagensteuerung (13) ist einerseits mit einer Steuereinheit (14), einem sog. Warehouse-Manager, für das Warehouse (10) und die Fertigungseinrichtung (18-22) sowie gegebenenfalls auch die Fördereinrichtung (4) verbunden.

Der Warehouse-Manager (14) steuert den Aufenthalt und die Verlagerung der LAM (6) in der Fertigungsanlage (1). Er erteilt insbesondere der Fördereinrichtung (4) Aufträge das jeweilige LAM (6) zur richtigen Adresse, z.B. Fertigungseinrichtung oder Bereitstellung, zu transportieren. Er steuert auch das Routing, d.h. die Reihenfolge der von einem LAM (6) angefahrenen Fertigungseinrichtungen (18-22). Letztere müssen nicht direkt aufeinander folgen, sondern können irgendwo in der Fertigungsanlage angeordnet sein. Beim Routing bzw. der verfolgten Förderbahn können Fertigungseinrichtungen (18-22) durchfahren oder umfahren werden.

Der Warehouse-Manager (14) beinhaltet ein Lagerverwaltungssystem für die Steuerung von Logistikprozessen vom Wareneingang zum Warenausgang, für die Bestandverwaltung und Inventur, für das Task-Management, für eine Transaktions-Historie, für eine Lager-Konfigurationsanpassung durch Administratoren und für Schnittstellen zu Systemkomponenten der Fertigungsanlage (1). Ferner beinhaltet der Warehouse-Manager (14) ein Materialflusssystem mit globaler Steuerung der automatisierten Anlagenkomponenten, insbesondere der Fördereinrichtung (4), für die Transportverwaltung, für eine Stau- und Flusskontrolle, für das besagte Routing und Durchsatzoptimierungen, für eine integrierte Störungsbehebung über alle Levels, für eine Koordination mit Subsystemen, für eine Anlagenindividualisierung und für eine globale Materialflussoptimierung.

Ferner gibt es eine Verbindung zwischen der Steuerung (13) und einer Steuereinheit (15), die als Toolstore-Manager bezeichnet wird. Es besteht auch eine Verbindung zwischen dem Warehouse-Manager (14) und dem Toolstore-Manager (15). Der Toolstore-Manager (15) befasst sich mit dem Toolstore (11). Er beinhaltet einen Werkzeugmanager für Logistikprozesse von Werkzeugeingang zu Werkzeugemission, für die Kommissionierung der Werkzeuge für geplante Produktionen, für eine Verwaltung von Lagerorten und Einsatzorten, für ein Controlling und eine Dokumentation von Wartungsintervallen und für eine Historie aller Werkzeuge. Ferner werden die Ersatzteile hinsichtlich einer Bestandsverwaltung und Inventur gesteuert.

Entsprechendes gilt auch für die Verbrauchsteile, sog. consumables und für eine Werkstatt.

Der Toolstore-Manager (15) ist mit einer Steuereinheit (16), dem sog. Fleet-Manager, verbunden. Dieser beinhaltet Schnittstellen zum Logistik- und Materialflusssystem und betrifft die Funktionen von Disposition, Planung und Flotten-Management der Fördermittel (5). Ferner hat auch der Warehouse-Manager (14) eine Verbindung zum Fleet-Manager (16). Der Fleet-Manager (16) führt Aufträge sowohl vom Warehouse-Manager (14), als auch vom Toolstore-Manager (15) aus.

Der Fleet-Manager (16) ist verbunden mit einer weiteren Steuereinheit (17), die als Field-Manager bezeichnet wird. Dieser befasst sich mit der Statuskontrolle für Abläufe in der Fertigungsanlage (1), Schnittstellen zur Hallen- und Gebäudetechnik sowie Schnittstellen zur Qualitätssicherung. Der Field-Manager (17) ist seinerseits mit der Steuerung (13) verbunden.

Die Steuereinrichtungen (38) der Fertigungseinrichtungen (18-22) und ihre Steuerprogramme bzw. Prozessmanager (4) sind ebenfalls mit der Anlagensteuerung (13), insbesondere dem Warehouse-Manager (14) und dem Toolstore-Manager (15) verbunden.

Die vorgenannten Verbindungen zwischen der Steuerung (13) und den Steuereinheiten (14-17,40) sind als Signalleitungen ausgebildet. Sie können kabelgebunden oder kabellos ausgeführt sein.

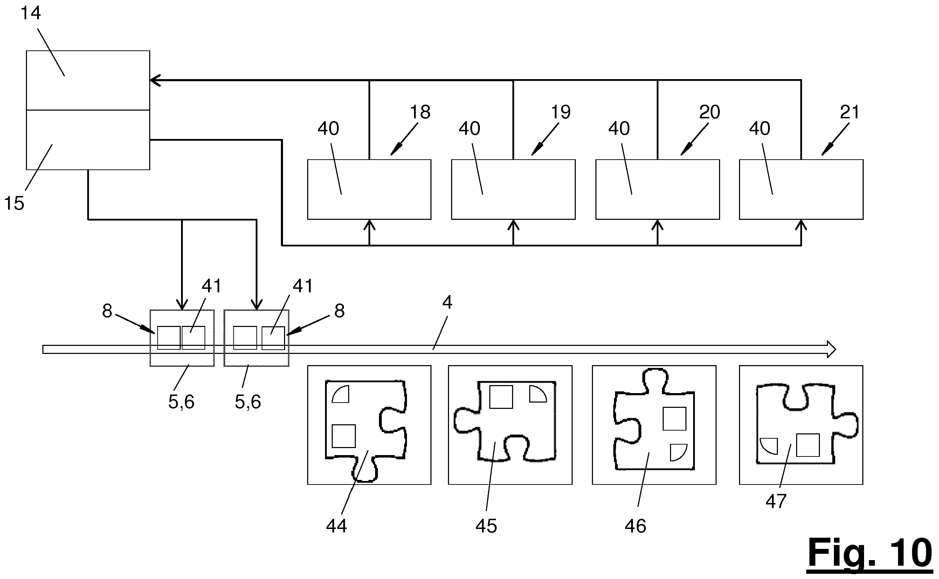

Der Toolstore-Manager (15) steuert die hardware- und/oder softwaretechnische Ausrüstung der einzelnen Fertigungseinrichtungen (18-22) bzw. Fertigungsmittel (28,29). Dies betrifft z.B. das Beschicken der Fertigungsmittel (28,29) bzw. Speicher (27) mit Werkzeugen (8) und den Abtransport nicht mehr benötigter Werkzeuge (8) mittels LAM (6). Der Toolstore-Manager (15) kann auch die Speicherung der Steuerungsprogramme (40) in den Speichermitteln (39) der jeweiligen Steuereinrichtungen (38) steuern. Er kann insbesondere die Steuerungsprogramme (40) zentral speichern und an die Speichermittel (39) senden. Figur 10 verdeutlicht dies schematisch.

Der Toolstore-Manager (15) kann die beim Fertigungsablauf in den Fertigungseinrichtungen (18-22) vor Ort auszuführenden Prozess-Segmente disponieren und verwalten. Letztere bestehen jeweils aus dem benötigten Werkzeug (8) bzw. Toolsegment (41) und den dazugehörigen Programmsequenzen bzw. Toolsegmenten (42) im Steuerungsprogramm (40). Der typ-abhängige Aufruf und die Ausführung des Steuerungsprogramms (40) erfolgen durch die jeweilige Steuereinrichtung (38). Hierbei kann auch der Einsatz und ein evtl. Tausch des Werkzeugs (8) bzw. der Toolsegmente (41) vom Steuerungsprogramm (40) gesteuert werden.

Das Bearbeiten eines ein- oder mehrteiligen Werkstücks (2,2') in einem Fertigungsablauf und einer Abfolge von mehreren Fertigungsschritten bzw. Fertigungssegmenten (44-47) wird jeweils autonom in den Fertigungseinrichtungen (18-22) vom jeweils ausgewählten Steuerprogramm (40) gesteuert. Der Fertigungsablauf bzw. die Schritt-Sequenz der Prozess-Segmente sowie deren Adressen in der Fertigungsanlage (1) werden vom Warehouse-Manager (14) verwaltet und über die Verlagerung der Lastaufnahmemittel (6) bzw. die Fördereinrichtung (4) gesteuert. Die Steuerung der Fertigungsanlage (1) erfolgt somit dezentral.

Die Steuereinrichtungen (38) bzw. ihre Prozessmanager (40) melden an den Warehouse-Manager (14) Beginn und Ende eines Fertigungsprozesses bzw. Prozess-Segments. Der Warehouse-Manager (14) steuert dann entsprechend die Fördereinrichtung (4) für den Weitertransport des jeweiligen LAM (6) zu der jeweils im Fertigungsablauf folgenden Fertigungseinrichtung (19-22) oder zu einer Bereitstellung (9,10,11,12) und für die Zuführung des nächsten LAM (6) zum Arbeitsbereich (26) an.

Die Fertigungsanlage (1) mit dem Fertigungsbereich (3) und den Bereitstellungen (9-12) sowie der Fördereinrichtung (4) kann beliebig konfiguriert werden. Hierbei können verschiedene Werkstücke (2,2') im Parallelbetrieb gefertigt werden. Dies kann z.B. die parallele Fertigung von linken und rechten Seitenwänden, eines Karosseriedachs, einer Bodengruppe oder dergleichen sein. Entsprechendes gilt auch für andere Arten von Werkstücken (2,2'), die nicht als Karosseriebauteile ausgebildet sind. Ferner können innerhalb dieser parallelen Fertigungsvorgänge verschiedene Typen von gleichartigen Werkstücken (2,2') in freiem Mix gefertigt werden,
Die Fertigungseinrichtungen (18-22) können allesamt unterschiedliche Fertigungsprozesse und Fertigungsschritte ausführen. Hierbei kann z.B. für jeden werkstückbezogenen Fertigungsschritt (44-47) eine eigene Fertigungseinrichtung (18-22) vorhanden sein. In einer Fertigungseinrichtung (18-22) können aber auch gleiche oder ähnliche Fertigungsprozesse oder Fertigungsschritte an mehreren unterschiedlichen Werkstücken (2,2') durchgeführt werden. Ferner ist es möglich, einen Fertigungsschritt für ein bestimmtes Werkstück (2,2') in zwei oder mehr funktionsgleichen Fertigungseinrichtungen (18-22) parallel auszuführen. Dies kann z.B. zum Ausgleich unterschiedlich langer Taktzeiten für verschiedene Fertigungsschritte sinnvoll sein. Ferner ist es möglich, Fertigungskapazitäten und die Zahl der dabei eingebundenen Fertigungseinrichtungen (18-22) zu verkleinern oder zu vergrößern.

Durch die schnelle applikationsspezifische Adaption der Fertigungsanlage (1) und insbesondere der Fertigungseinrichtungen (18-22) können die einzelnen applikationsbezogenen Fertigungsjobs der Fertigungseinrichtungen (18-22) flexibel und schnell geändert werden. Die hierfür erforderliche werkzeugtechnische Umrüstung sowie Umprogrammierung und die hierdurch bewirkte applikationsspezifische Adaption der Fertigungseinrichtungen (18-22) kann ebenfalls sehr schnell vonstatten gehen. Entsprechend schnell kann auch die Fördereinrichtung (4) mit ihren Förderbahnen schnell geändert und umprogrammiert werden.

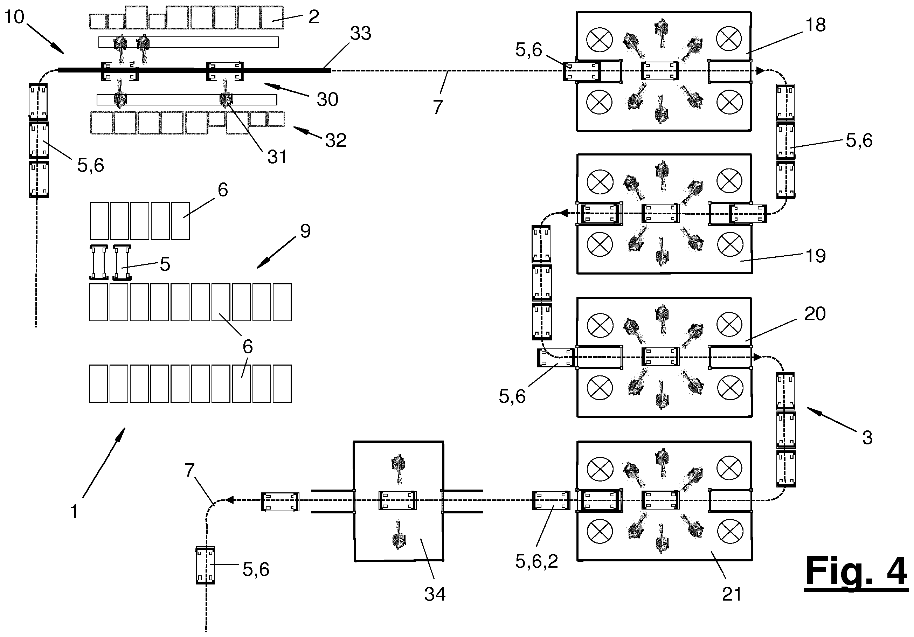

Figur 4 verdeutlicht eine beispielhafte Konfiguration einer Fertigungsanlage (1) mit einem Fertigungsbereich (3), in dem vier Fertigungseinrichtungen (18-21) in einer Reihe angeordnet sind und von einem Förderweg (7) nacheinander durchsetzt werden. Die Fertigungseinrichtungen (18-21) können entsprechend Figur 3 ausgebildet sein. Nach Durchlaufen der letzten Fertigungseinrichtung (21) kann das Fördermittel (5) mit dem LAM (6) und dem gefertigten Werkstück (2) in einen Abgabebereich (34) fahren, an dem das Werkstück (2) mit Robotern oder dgl. entladen und aus diesem Teil der Fertigungsanlage (1) ausgeschleust werden kann. Es kann z.B. in ein Zwischenlager verbracht oder direkt in einen weiteren Fertigungsbereich (3) zugeführt werden.

Figur 4 verdeutlicht auch das dem Fertigungsbereich (3) vorgeschaltete Warehouse (10), in dem die Fördermittel (5) mit LAM (6) mit ein oder mehreren Werkstücken (2,2') beladen werden und anschließend in den Fertigungsbereich (3) einfahren. Zudem sind eine Bereitstellung (9) für LAM (6) und eine Bereitstellung (12) für Fördermittel (5) vorgeschaltet und über einen Förderweg (7) an das Warehouse (10) und den Fertigungsbereich (3) angeschlossen.

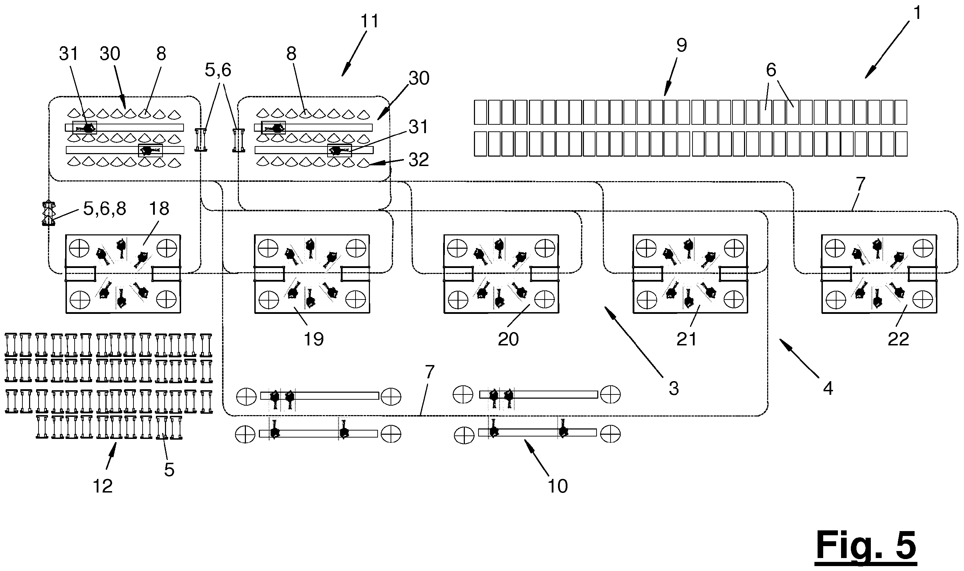

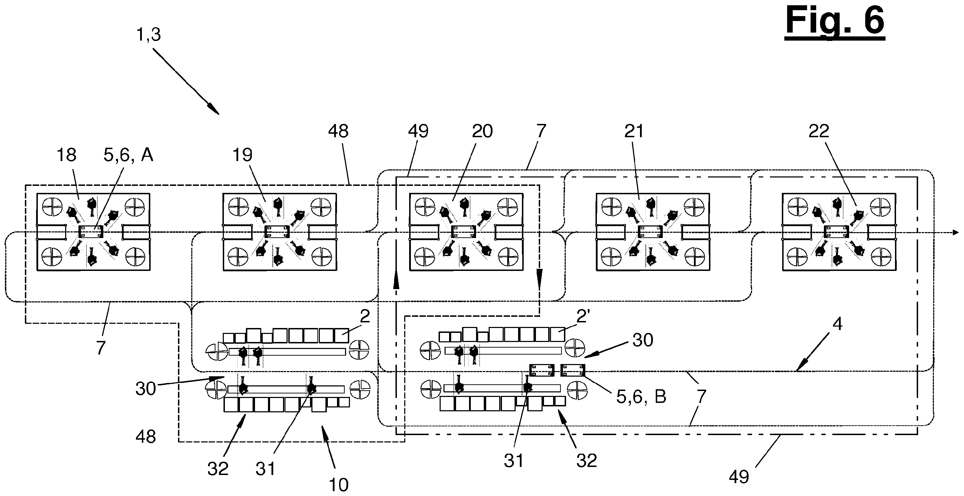

Figur 5 und 6 zeigen beispielhaft eine andere Konfiguration der Fertigungsanlage (1) mit einem Fertigungsbereich (3), der eine Reihe von fünf Fertigungseinrichtungen (18-22) aufweist. Figur 5 verdeutlicht hierbei die applikationsspezifische Vorbereitung und Rüstung des Fertigungsbereichs (3).

Die Fördermittel (5) aus einer Bereitstellung (12) werden zunächst mit geeigneten LAM (6) beladen und fahren dann in einen Tool-Store (11), welcher ein oder mehrere Beladebereiche (30) aufweisen kann. Hier werden die benötigten applikationsspezifischen Werkzeuge (8) auf die Fördermittel (5) und LAM (6) geladen, die anschließend auf programmierten Förderbahnen in die jeweiligen Fertigungseinrichtungen (18-22) einfahren und dort die Werkzeuge (8) an die Fertigungsmittel (28,29) und ggf. die Speicher (27) übergeben. Zudem erfolgt eine Umprogrammierung in der Steuereinheit der jeweiligen Fertigungseinrichtung (18-22). Die Rüstung kann im Parallelbetrieb erfolgen.

Das Entladen der Werkzeuge (8) kann in den Fertigungseinrichtungen (18,22) durch die dortigen Fertigungsmittel (28,29) erfolgen, wobei im Wechsel die nicht mehr benötigten Werkzeuge (8) an das Fördermittel (5) und das LAM (6) übergeben werden.

In einer anderen und nicht dargestellten Variante kann für die Werkzeugbestückung auf dem Fördermittel (5) und/oder dem LAM (6) eine Handlingeinrichtung angeordnet sein, die den Werkzeugwechsel und die Neubestückung mit Werkzeugen (8) ausführt. Diese Handlingeinrichtung kann z.B. ein mehrachsiger Handlingroboter sein. Hiermit können Werkzeuge (8) und/oder andere Vorrichtungen ausserhalb des Förder- oder Durchfahrtswegs (7) platziert werden.

Nach erfolgter applikationsspezifischer Umrüstung oder Ausrüstung des Fertigungsbereichs (3) kann das Fertigungsverfahren beginnen. Figur 6 verdeutlicht dieses Stadium. In dem Netz von Förderwegen (7) ändern sich dabei die jeweiligen programmierten Förderbahnen der Fördermittel (5). In Figur 5 und 6 werden mit der Bezugsziffer 7 dabei die besagten programmierten Förderbahnen auf den vorhandenen Förderwegen bezeichnet.

Über die Fördereinrichtung (4) ist ein Warehouse (10) an den Fertigungsbereich (3) angeschlossen, welches ebenfalls zwei oder mehr Beladebereiche (30) aufweisen kann. Hierbei können entsprechend des Fertigungsverfahrens unterschiedliche Werkstücke (2,2') zu den verschiedenen Fertigungseinrichtungen (18-22) transportiert werden. Die Fertigungseinrichtungen (18-22) können wieder gemäß Figur 3 ausgebildet sein.

Bei einem in Figur 8, 9 und 10 schematisch dargestellten Fertigungsablauf fährt ein Fördermittel (5) mit LAM (6) vom Typ D und einem z.B. als Teilesatz ausgebildeten Werkstück (2) von einem Beladebereich (30) in die erste Fertigungseinrichtung (18) ein. In der ersten Fertigungseinrichtung (18) wird nach der Typ-Erfassung in einem ersten Fertigungsschritt (44) ein Prozess-Segment ausgeführt, z.B. Assemblieren und Fügen von Werkstückteilen.

Die Fertigungsmittel (28) bzw. Handlingroboter entnehmen mit geeigneten Werkzeugen (8), insbesondere Geogreifern, die Werkstückteile vom LAM (6). Hierbei können die Fertigungsmittel (28) miteinander kooperieren und mit ihren Geogreifern sich bedarfsweise gegenseitig verriegeln und die gegriffenen und gespannten Werkstückteile den ein oder mehreren Fertigungsmitteln (29), insbesondere Schweissrobotern, zum Fügen präsentieren. Bedarfsweise werden verriegelte Geogreifer im Verbund in weitere Arbeitspositionen gebracht. Ferner können bei Bedarf ein oder mehrere weitere Werkstückteile von ein oder mehreren Fertigungsmitteln (28) vom LAM (6) nachgeladen und den bereits gegriffenen Werkstückteilen zugefügt werden. Nach dem Fügevorgang wird das produzierte Werkstück auf das Fördermittel (5) und/oder den LAM (6) zurück gelegt und anschließend aus der Fertigungseinrichtung (18) abtransportiert. In der Fertigungseinrichtung (18) findet z.B. ein Laserschweissen mit einem Remote-Laser an den gegriffenen Werkstückteilen statt, wobei das teilgefügte Werkstück (2) am Ende des Fertigungsschritts (44) einen Zustand 1 aufweist.

Nach dem zweiten Fertigungsschritt (45) in der folgenden Fertigungseinrichtung (19) und dem dortigen einzelnen Prozess-Segment mit einem weiteren angefügten Werkstückteil hat das Werkstück (2) einen Zustand 2. Nach der dritten Fertigungseinrichtung (20) und dem dritten Fertigungsschritt (46) mit einem Prozess-Segment hat das Werkstück (2) einen Zustand 3. In der vierten Fertigungseinrichtung (21) und beim vierten Fertigungsschritt (46) mit zwei Prozess-Segmenten wird das Werkstück (2) bzw. das Fertigprodukt (43) in Form einer Baugruppe mit dem Zustand 4 vollendet und abtransportiert.

Ein zweites Werkstück (2') auf einem LAM (6) vom Typ C kann gemäß Figur 8 und 9 ebenfalls durch die Fertigungseinrichtungen (18-22) bewegt werden. Hierbei findet z.B. nach der Typ-Erfassung nur in der ersten Fertigungseinrichtung (18) ein Bearbeitungsprozess mit zwei Prozess-Segmenten statt. In der zweiten, dritten und vierten Fertigungseinrichtung (19,20,21) erfolgt keine Bearbeitung. Hier gibt es kein zugehöriges Steuerprogramm (40) und keine Prozess-Segmente. Der weitere Fertigungsablauf erstreckt sich ggf. über andere Fertigungseinrichtungen.

Bei dieser Variante werden die Werkstücke (2,2') parallel und unabhängig voneinander bearbeitet und transportiert. Fertigungsstationen (18-22) ohne vorgesehene Bearbeitung des jeweiligen Werkstücks (2,2') können durchfahren oder umfahren werden.

In einer anderen Variante kann während eines Fertigungsprozesses bzw. Prozess-Segments in einer Fertigungseinrichtung (18-20) das Werkstück (2) insgesamt vom LAM (6) abgehoben werden, wobei das Fördermittel (5) mit dem leeren LAM (6) vom Typ A die Fertigungseinrichtung verlässt und ein neues Fördermittel (5) mit einem LAM (6) von einem anderen Typ B einfährt, wobei hier das fertig produzierte Werkstück (2) anschließend abgelegt und weiter transportiert wird.

Bei diesem Wechsel oder Umladevorgang kann das produzierte Werkstück (2) mit einem weiteren, ggf. anderweitig gefertigten, Werkstück (2') oder Werkstückteilen lose ergänzt oder auch gefügt werden, die auf dem anderen LAM (6) vom Typ B zugeführt werden. Dieses LAM (6) ist zur Aufnahme beider Werkstücke (2,2') oder Werkstückteile adaptiert. Das produzierte Werkstück (2) kann in korrekter Relativposition zu dem oder den weiteren Werkstück(en) (2') oder Werkstückteilen auf dem LAM (6) abgelegt werden. Ferner kann eine Weiterbearbeitung der assemblierten Werkstücke (2,2') oder Werkstückteile erfolgen, z.B. ein Fügen. Das Steuerprogramm (40) für den ersten LAM-Typ A kann hierfür eine zusätzliche Programmsequenz aufweisen oder aufgrund der Typ-Erfassung des einfahrenden zweiten LAM-Typ B umgeschaltet werden.

Die assemblierte und ggf. gefügte Werkstückkonfiguration kann dann in die nächste Fertigungseinrichtung gefahren werden. Diese Fertigungs- und Umladevorgänge können sich wiederholen, wobei ein komplexes Werkstück, z.B. eine Vorbau-Gruppe einer Fahrzeugkarosserie, aus Einzelteilen und mit z.B. vier verschiedenen und an die Zwischenprodukte angepassten LAM-Typen (A,B,C,D) produziert wird.

Für die Werkstückübergabe wird die betreffende Fertigungseinrichtung (21) von LAM-Typ A und LAM-Typ B in direkter Folge und mit einer vorgegebenen Reihenfolge bzw. Sequenz durchfahren. Durch eine entsprechende Anzahl von solchen Übergaben ist die verbindende Fördertechnik durch den gesamten anlagenübergreifenden Produktionsprozess sicher gestellt.

Ferner ist es möglich, dass ein Fördermittel (5) mit LAM (6) vom Typ A und einem in einem Fertigungsschritt produzierten Werkstück (2) aus einer Fertigungseinrichtung (18) zunächst zum Warehouse (10) zurück gefahren und dort mit weiteren Werkstücken oder Werkstückteilen ergänzt wird sowie anschließend in die nächste Fertigungseinrichtung (19) einfährt. Entsprechende Vorgänge können sich auch bei den weiteren Fertigungsschritten und Fertigungseinrichtungen (20-22) anschliessen.

Jeder Typ (A,B,C,D) von LAM (6) kann jeweils in einem geschlossenen Fertigungs-Loop (48,49) auf entsprechend programmierten, vorzugsweise ringförmig geschlossenen Förderbahnen transportiert werden. Der Fertigungs-Loop (48,49) erstreckt über ein oder mehrere zugeordnete Fertigungseinrichtungen (18-22) und ggf. durch die Bereitstellungen (9,10). Der Fertigungs-Loop (48,49) korrespondiert mit dem Fertigungsablauf für ein Werkstück (2,2') und den hierbei vorgesehenen Fertigungsschritten (44-45) zur Herstellung eines Fertigungs- oder Zwischenprodukts (43). Die Zahl der eingebundenen Fertigungseinrichtungen (18-22) kann dabei der Zahl der Fertigungsschritte (44-45) entsprechen.

Die Fertigungs-Loops (48,49) können getrennt voneinander und ggf. bereichsweise parallel verlaufen. Bei einer Weiterverarbeitung des Fertigungs- oder Zwischenprodukts (43) in einem nachfolgenden weiteren Fertigungsablauf mit einem eigenen Fertigungs-Loop (49) können sich die beiden Fertigungs-Loops (48,49) in einer gemeinsamen Fertigungseinrichtung (21) überschneiden.

In Figur 6 sind beispielhaft zwei Fertigungs-Loops (48,49) schematisch dargestellt. Der erste gestrichelt dargestellte Fertigungs-Loop (48) für ein oder mehrere LAM (6) vom Typ A und Werkstücke (2) erstreckt sich über drei Fertigungsschritte und drei Fertigungseinrichtungen (18-21) und die Bereitstellung (10). Der zweite strichpunktiert dargestellte Fertigungs-Loop (49) für ein oder mehrere LAM (6) vom Typ B und andere Werkstücke (2') erstreckt sich über drei Fertigungsschritte und drei Fertigungseinrichtungen (18-21) und die Bereitstellung (10). In der Fertigungseinrichtung (21) überschneiden sich die Fertigungs-Loops (48,49), wobei hier das vorgenannte Umladen des Werkstücks (2) bzw. Fertigungs- oder Zwischenprodukts (43) vom LAM (6) Typ A auf ein anderes LAM (6) vom Typ B erfolgt.

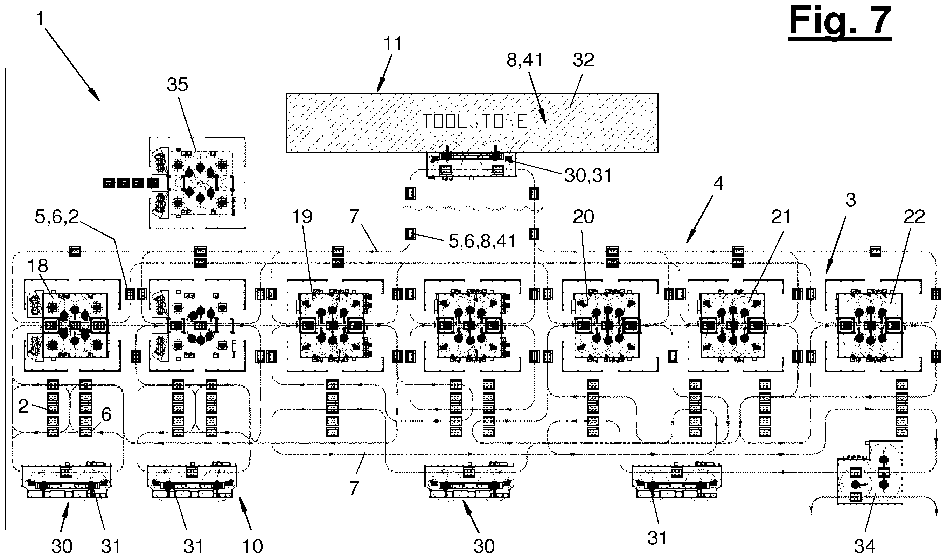

Figur 7 zeigt eine weitere komplexere Konfiguration einer Fertigungsanlage (1) mit einem Fertigungsbereich (3) der vorbeschriebenen Art, einem Warehouse (10) und einem Toolstore (11). Die anderen Bereitstellungen (9,12) sind der Übersicht halber nicht dargestellt. Das Warehouse (10) und der Toolstore (11) können auf gegenüber liegenden Seiten des Fertigungsbereichs (3) angeordnet sein, indem sich z.B. eine einzelne Reihe von Fertigungseinrichtungen (18-21) befindet. Eine solche Anordnung hat den Vorteil, dass die Förderwege (7) und die programmierten Förderbahnen für den Werkzeugtausch und für die Werkstückzuführung entflochten werden können. Außerdem ist eine Variante dargestellt, in der den verschiedenen

Beladebereichen (30) des Warehouse (10) Pufferspeicher für lose LAM (6) mit vorbereiteten Werkstückkonfigurationen (2) zugeordnet sind. Die für den Werkstücktransport von und zu den Fertigungseinrichtungen (18-22) benutzten Fördermittel (5) laden dann nur die vorbereiteten LAM (6) auf, wobei andere Fördermittel (5) für die Bestückung des Pufferspeichers zuständig sind. Dies sorgt für besonders schnelle Wechsel- und Bestückungszeiten.

Ein Fertigungsbereich (3) kann außer den vorgenannten Arten von applikationsflexiblen Fertigungseinrichtungen (18-22) auch eine oder mehrere andere Fertigungseinrichtungen (35) aufweisen, die z.B. eine vorgegebene Werkzeugbestückung und einen vorgegebenen Fertigungsschritt beinhalten, der nicht oder nur begrenzt flexibel ist. In Figur 7 ist die Fertigungseinrichtung (35) in dieser Weise ausgebildet. Sie kann z.B. als Geostation oder Framingstation für Fahrzeugkarosserien ausgebildet sein und eine Paarung von Spannrahmen aufweisen, die gegebenenfalls mehrfach und vor Ort wechselbar vorhanden ist.

Solche nicht oder weniger flexiblen Fertigungseinrichtungen (35) können z.B. für besonders große und schwere Werkstücke oder Werkstückkonfigurationen vorgesehen sein. Sie können ansonsten die gleichen Eigenschaften wie die applikationsflexiblen Fertigungseinrichtungen (18-22) haben, insbesondere applikationsflexible Fertigungsmittel (28,29), Speicher (27) etc.. Sie können ferner ebenfalls an die Fördereinrichtung (4) angeschlossen sein und auch einen durchgehenden Förderweg (7) besitzen.

Eine Fertigungseinrichtung (35) kann z.B. auch als Tryout-Station ausgebildet sein, die der Entwicklung einer neuen Applikation dient. Sie kann im Grundaufbau den einheitlichen und standardisierten Fertigungseinrichtungen (18-22) entsprechen, wobei hier ein Fertigungsprozess und ein Steuerprogramm (40) unter Einsatz von applikationsspezifischen Werkzeugen (8) erstellt und getestet wird.

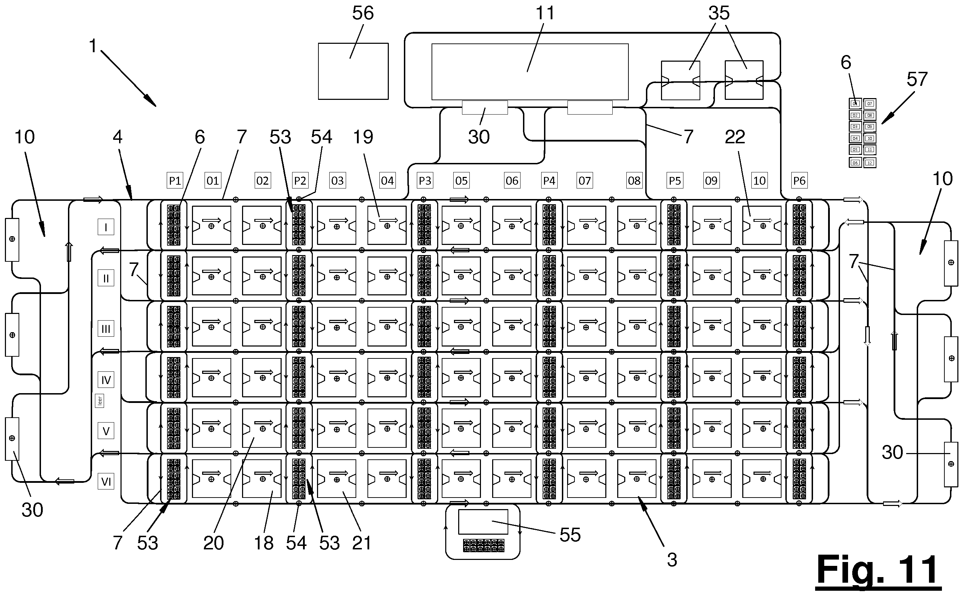

Figur 11 zeigt eine weitere Variante einer Fertigungsanlage (1) mit einem Fertigungsbereich (3) und Bereitstellungen (10,11) für Werkstücke und applikationsspezifische Werkzeuge. Dem Toolstore (11) ist ein LAM-Konfigurationsbereich (56) zugeordnet. Am Rand des Fertigungsbereichs (3) ist ein Reparaturbereich (55) angeordnet. Die gezeigte Fertigungsanlage (1) beinhaltet auch zwei oder mehr gesonderte Fertigungseinrichtungen (35), die z.B. als Tryout-Stationen ausgebildet und nahe am Toolstore (11) angeordnet sind. Zudem kann ein Zwischenspeicher (57) am Ende der Fertigungsanlage (1) vorhanden sein, an dem die Endprodukte von den LAM (6) abgeladen und evtl. auf andere Förderer, insbesondere Skids, umgeladen werden. Hier kann sich z.B. eine Lackierstraße anschließen, wobei auch eine Lackiersequenzierung erstellt werden kann.

Im Fertigungsbereich (3) sind die Fertigungseinrichtung (18-21) in einer kartesischen Matrix mit sechs Reihen (I-VI) und zehn Spalten (01-10) angeordnet. Die Fördereinrichtung (4) und deren Förderwege (7) erstrecken sich zwischen und längs den Reihen (I-VI) und verbinden diese mit den links und rechts angeordneten Warehouses (10). Auf diesen Haupt-Förderwegen (7) herrscht z.B. Einbahnverkehr mit zwei oder mehr Spuren für die nicht dargestellten Fördermittel (5). Die Einbahnrichtung wechselt sich reihenweise ab. Die Haupt-Förderwege (7) sind außerdem quer verbunden, insbesondere an den äußeren Anlagenrändern und im Warehouse-Bereich. Ferner sind die besagten Förderwege (nicht dargestellt) in oder durch die Fertigungseinrichtung (18-21) vorhanden.

Bei der Fertigungsanlage (1) in Figur 11 kann der Gesamtmaterialfluss an Werkstücken (2,2') in Mikro-Fertigungsloops geteilt werden, sodass die nötige Gesamtsequenz nur von der Reihenfolge von jeweils zwei LAM (6) bzw. Fördermitteln (5) abhängt, die vom Warehouse-Manager (14) in die jeweils nächste Fertigungseinrichtung (18, 22) geschickt werden. An verschiedenen Stellen sind zwischen Fertigungseinrichtungen (19,20) Parkbereiche (53) angeordneten, in denen ein oder mehrere leere oder beladene LAM (6) zwischengeparkt werden können. In den Reihen (I-VI) sind z.B. jeweils zwei Fertigungseinrichtungen (18,19) zu einem Block zusammengeordnet, wobei die Blocks von jeweils einem Parkbereich (53) getrennt werden. Die Parkbereiche (53) sind jeweils ringartig von Neben-Förderwegen (7) umschlossen. Auf den Haupt- und Nebenförderwegen (7) kann es Vorfahrtsregeln geben.

Bei miteinander verketteten und in der vorbeschriebenen Weise überschnittenen Mikro-Loops müssen die LAM (6) wegen des Umladevorgangs in einer bestimmten Reihenfolge in eine gemeinsame Fertigungseinrichtung einfahren. Diese Reihenfolge wird am Parkbereich (53) erzeugt und sichergestellt. Hierbei gibt es an einem der Haupt-Förderwege (7) zwischen den Reihen (I-VI) an den Parkbereichen (53) jeweils eine als vorläufige Adresse definierte Position (54) für die LAM (6).

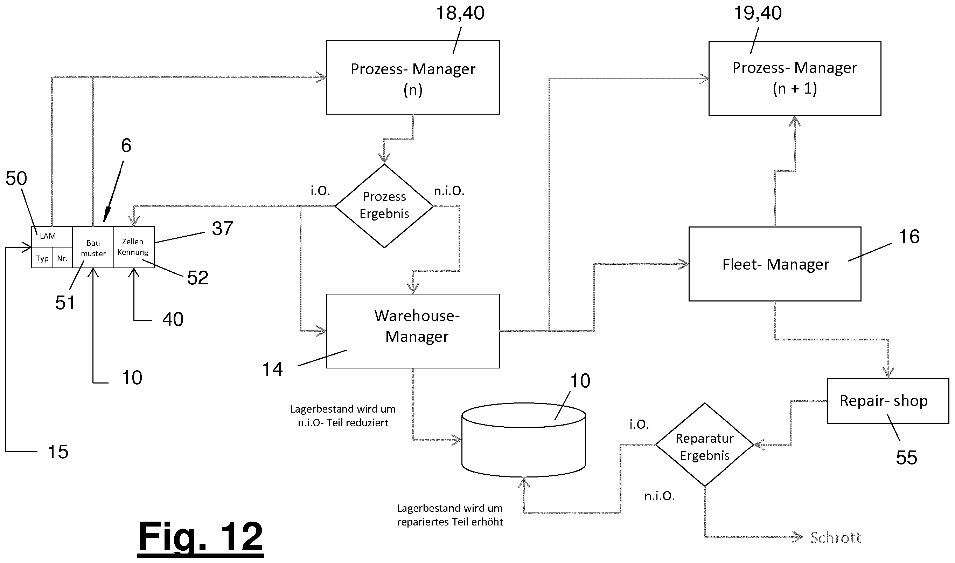

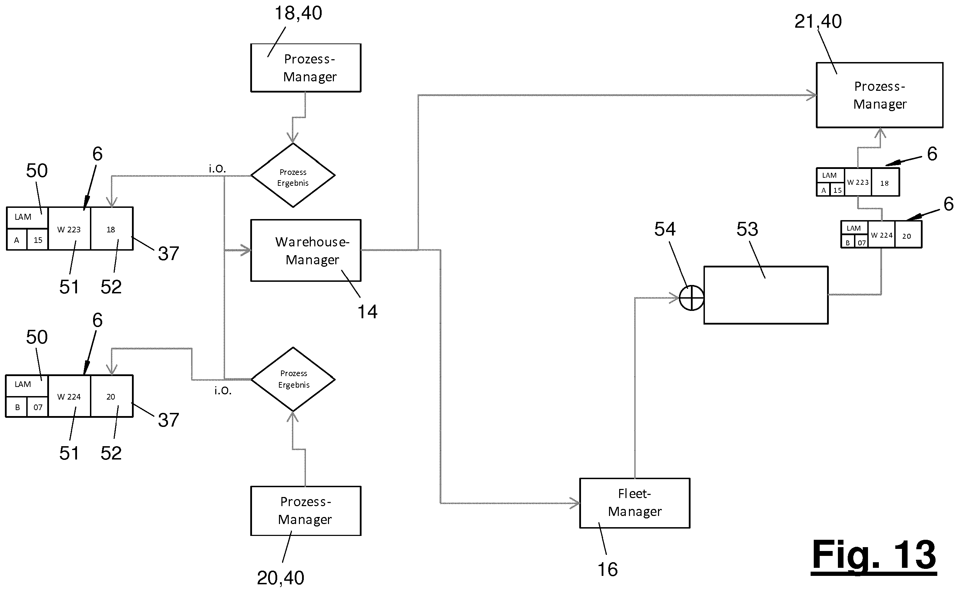

Wie Figur 12 und 13 verdeutlichen, kann eine Typkennung (37) als Codierung ausgebildet sein und mehrere Kennungsfelder (50,51,52) für verschiedene Informationen bzw. Daten aufweisen. Ein erstes Kennungsfeld (50) kann z.B. für den LAM-Typ vorgesehen sein. Es kann zweiteilig sein und außerdem eine LAM-spezifische Identifikationsangabe enthalten. Das Kennungsfeld (50) kann vom Toolstore-Manager (15) beschrieben werden, was z.B. im LAM-Konfigurationsbereich (56) erfolgt.

Das zweite Kennungsfeld (51) kann eine Angabe zum Baumuster bzw. zum jeweiligen Werkstück (2,2') enthalten. Dieses Kennungsfeld (51) kann z.B. im Warehouse (10) bei der Beladung beschrieben werden.

Ein drittes Kennungsfeld (52) kann eine Zellenkennung bzw. eine Kennung der zuletzt besuchten Fertigungseinrichtung (18-22) aufweisen. Dieses Kennungsfeld (52) wird z.B. vom Prozessmanager (40) der jeweiligen Fertigungseinrichtung (18-22) beschrieben. Das Kennungsfeld (52) wird in jeder Fertigungseinrichtung (18-22) upgedatet.

Figur 12 zeigt beispielhaft einen Ausschnitt oder Baustein aus einem Steuer- und Fertigungsablauf. Hier wird z.B. in der vorbeschriebenen Weise nach der Typ-Erfassung über die Typkennung (37) ein Fertigungsprozess in einer ersten Fertigungseinrichtung (18) ausgeführt, wobei der Prozessmanager (40) anschließend an den Warehouse-Manager (14) eine Meldung über das Prozessergebnis übermittelt. Wenn das Prozessergebnis in Ordnung ist, wird das Kennungsfeld (52) mit der Zellenkennung beschrieben und das LAM (6) vom Warehouse-Manager (14) an die im Fertigungsablauf vorgesehene nächste Fertigungseinrichtung (19) geschickt. Dies kann über den Fleet-Manager (16) geschehen. Außerdem gibt der Warehouse-Manager (14) zur Beschleunigung des Rüstprozesses an den Prozessmanager (40) der nächsten Fertigungseinrichtung (19) eine Meldung über die bevorstehende Ankunft des nächsten LAM (6) und seines Typs (A,B,C,D). Bei einem LAM-Typwechsel kann ein Umrüstvorgang, insbesondere ein Werkzeugwechsel, bereits während der Transportzeit erfolgen und mit dieser überschnitten werden. Anschließend findet in der Fertigungseinrichtung (19) der Fertigungsprozess mit anschließender Meldung des Prozessergebnisses an den Warehouse-Manager (14) und Updaten des Kennfelds (52) statt. Danach erfolgt der vorgenannte Weitertransport des LAM im vorgesehenen Fertigungsablauf.

Falls ein Prozessergebnis nicht in Ordnung ist, wird das LAM (6) mit dem Werkstück (2,2') zum Reparaturbereich (55) transportiert. Dies veranlasst der Warehouse-Manager (14) über den Fleet-Manager (16). Dieser informiert ggf. auch entsprechend den Prozessmanager (40) der nächstfolgenden Fertigungseinrichtung (19). Ferner wird vom Warehouse-Manager (14) der Werkstückbestand in der Bereitstellung (10) um das fehlerhafte Werkstück reduziert. Im Reparaturbereich (55) wird eine Reparatur des Werkstücks (2,2') und des Prozessfehlers versucht. Ist das Reparaturergebnis in Ordnung, wird der Lagerbestand im Warehouse (10) um das reparierte Teil wieder erhöht oder das reparierte Teil ggf. direkt wieder in den Fertigungsablauf eingeschleust. Bei einem ungenügenden Reparaturergebnis erfolgt eine Verschrottung.

Figur 13 zeigt einen weiteren Aspekt bzw. Baustein in dem Anlagen übergreifenden Steuerungs- und Fertigungsablauf in Verbindung mit dem vorgenannten Parkbereich (53) von Figur 11. In Fertigungseinrichtungen (18,20) werden verschiedene Werkstücke auf verschiedenen LAM-Typen (A,B) bearbeitet. In der nächsten Fertigungseinrichtung (21) soll die Weiterverarbeitung und Umladung eines Werkstücks von LAM-Typ (A) auf LAM-Typ (B) erfolgen. Hierzu kündigt der Warehouse-Manager (14) den Prozess-Manager (40) der Fertigungseinrichtung (21) den nächsten Bearbeitungsjob und die Einfahrsequenz der LAM (6) an. Hierbei muss der LAM-Typ (A) vor dem LAM-Typ (B) in die Fertigungseinrichtung (21) einfahren.

Beide LAMs (A,B) müssen nun zunächst zu dem der Fertigungseinrichtung (21) vorgelagertem und zugeordneten Parkbereich (53) fahren. Dies wird vom Warehouse-Manager (14) über den Fleet-Manager (16) veranlasst. Die LAM (6) vom Typ (A) und (B) steuern dabei zunächst die Position (54) als vorläufige Adresse an. Von hier aus wird das endgültige Ziel nach folgenden Kriterien festgelegt. Dieses Ziel kann die zugeordnete Fertigungseinrichtung (21) sein, wenn kein Vorgänger-LAM des ankommenden Typs (A,B) vor dieser Fertigungseinrichtung (21) in Warteposition ist. Die Fertigungseinrichtung (21) wird in diesem Fall direkt und ohne Zwischenhalt im Parkbereich (53) angefahren. Wegen der einzuhaltenden Typ-Sequenz kann die Fertigungseinrichtung (20) außerdem vom LAM-Typ (A) direkt angefahren werden, wenn der andere Folge-Typ (B) gerade an einem der Plätze im Parkbereich (53) steht und überholt werden muss. Dies betrifft eine Sequenzheilung, falls die LAM-Typen (A,B) in der falschen Reihenfolge an der Position (54) ankommen. Für den Typ (B) wird der Parkbereich (53) als Ziel festgelegt, wenn der Typ (B) in falscher Sequenz vor dem Typ (A) ankommt und von letzterem in der Eingangs genannten Weise zur Sequenzheilung überholt werden soll. Der Parkbereich (53) wird außerdem als Ziel zugewiesen, wenn bereits Vorgänger-LAM-Typen (A,B) für die Fertigungseinrichtung (21) in Warteposition stehen. In diesem Fall wird der Parkbereich (53) als Verfügbarkeitsspeicher aufgefüllt. Er kann dabei z.B. einen Puffer bei eventuellen Prozessstörungen oder sonstigen Verzögerungen im Prozess- oder Fertigungsablauf bilden.

Abwandlungen der gezeigten und beschriebenen Ausführungsbeispiele sind in verschiedener Weise möglich. Insbesondere können die Merkmale der verschiedenen Ausführungsbeispiele und ihrer Varianten beliebig miteinander kombiniert, insbesondere auch vertauscht werden.

In einer Variante können die Fertigungsschritte (44-47) in einer einzelnen Fertigungseinrichtung (18-22) erfolgen. Ein und dieselbe Fertigungseinrichtung kann innerhalb des Fertigungsverfahrens mehrfach beteiligt sein. Auch ist es möglich, ein und die selbe Fertigungseinrichtung von zwei oder mehr unterschiedlichen, aber synchron laufenden Fertigungsverfahren zu nutzen. Eine weitere Variante sieht eine zentrale Steuerung der Fertigungseinrichtungen (18-22) über die Anlagensteuerung (13) vor, wobei eine Typ-Erfassung der LAM (6) entfallen oder zu Verifizierungszwecken benutzt werden kann.

### BEZUGSZEICHENLISTE

- 1: Fertigungsanlage
- 2: Werkstück
- 2': Werkstück
- 2": Werkstück
- 3: Fertigungsbereich
- 4: Fördereinrichtung, Fleet
- 5: Fördermittel, AGV
- 6: Lastaufnahmemittel LAM
- 7: Förderweg
- 8: applikationsspezifisches Werkzeug
- 9: Bereitstellung für Lastaufnahmemittel LAM
- 10: Bereitstellung für Werkstücke, Warehouse
- 11: Bereitstellung für Werkzeuge, Toolstore
- 12: Bereitstellung für Fördermittel
- 13: Steuerung
- 14: Steuereinheit, Warehouse-Manager
- 15: Steuereinheit, Toolstore-Manager
- 16: Steuereinheit, Fleet-Manager
- 17: Steuereinheit, Field-Manager
- 18: Fertigungseinrichtung
- 19: Fertigungseinrichtung
- 20: Fertigungseinrichtung
- 21: Fertigungseinrichtung
- 22: Fertigungseinrichtung
- 23: Fertigungszelle
- 24: Schutzabtrennung
- 25: Schleuse
- 26: Arbeitsstelle, Bearbeitungsbereich
- 27: Speicher, Drehspeicher
- 28: Fertigungsmittel, Roboter, Handlingroboter
- 29: Fertigungsmittel, Roboter, Schweißroboter
- 30: Beladebereich
- 31: Beladeeinrichtung, Laderoboter
- 32: Lagerbereich
- 33: Energieversorgungseinrichtung, Energieladestrecke
- 34: Abgabebereich
- 35: Fertigungseinrichtung
- 36: Erfassungsvorrichtung
- 37: Typkennung, Codierung
- 38: Steuereinrichtung
- 39: Speichermittel
- 40: Steuereinheit, Steuerprogramm, Prozessmanager
- 41: Toolsegment, Hardwaretool, Werkzeug
- 42: Toolsegment, Softwaretool, Programmteil
- 43: Fertigungs-Produkt
- 44: Fertigungsschritt, Fertigungssegment
- 45: Fertigungsschritt, Fertigungssegment
- 46: Fertigungsschritt, Fertigungssegment
- 47: Fertigungsschritt, Fertigungssegment
- 48: Fertigungs-Loop, Typ A
- 49: Fertigungs-Loop, Typ B
- 50: Kennungsfeld
- 51: Kennungsfeld
- 52: Kennungsfeld
- 53: Parkbereich
- 54: Position
- 55: Reparaturbereich
- 56: LAM-Konfigurationsbereich
- 57: Zwischenspeicher
- 58: Positioniereinrichtung LAM
- 59 60 61 62 63 64 65 66: Zufahrtskorridor
- 67: Fertigungseinrichtung Sekundärprozess
- 68: Schnittstelle
- 69: Schnittstelle
- 70: Förderlinie, Hinweg
- 71: Förderlinie, Rückweg
- 72: Logistikbereich

- A: Typ LAM
- B: Typ LAM
- C: Typ LAM
- D: Typ LAM

## Patentansprüche

1. Fertigungsanlage für Werkstücke (2,2'), insbesondere Karosseriebauteile, wobei die Fertigungsanlage (1) eine Bereitstellung (10) für Werkstücke (2,2') und zumindest eine automatische Fertigungseinrichtung (18-22) aufweist, welche zumindest ein programmgesteuertes Fertigungsmittel (28,29) und einen Bearbeitungsbereich (26) aufweist, und die Fertigungsanlage (1) zumindest zwei voneinander verschiedenartige Lastaufnahmemittel (6) aufweist, welche jeweils eine Typenkennung (37) aufweisen, wobei die im Typ (A,B,C,D) verschiedenen Lastaufnahmemittel (6) an unterschiedliche Werkstücke (2,2') adaptiert sind,
wobei die Fertigungseinrichtung (18-22) ferner aufweist:
- einen Bearbeitungsbereich (26), der zur sequenziellen Aufnahme von mindestens zwei voneinander verschiedenartigen Lastaufnahmemitteln (6) ausgelegt ist,
- eine Erfassungsvorrichtung (36), welche ausgelegt ist, eine Typenkennung (37) eines der Lastaufnahmemittel (6) zu erfassen,
- eine Steuereinrichtung (38), die eingerichtet ist, den Typ (A,B,C,D) des Lastaufnahmemittels (6) anhand der durch die Erfassungsvorrichtung (36) erfassten Typenkennung (37) zu bestimmen und ein Steuerungsprogramm (40) für das zumindest eine Fertigungsmittel (28,29) anhand des bestimmten Typs (A,B,C,D) aus einer Vielzahl von Steuerungsprogrammen auszuwählen und auszuführen,
- wobei ein Fertigungsmittel (29) zum Bearbeiten eines Werkstücks (2,2') ausgebildet ist, **dadurch gekennzeichnet, dass**
- an dem Bearbeitungsbereich (26) ein Fertigungsmittel (28,29) angeordnet ist, das zum schwebenden Halten eines Werkstücks (2,2') beim Bearbeitungsprozess und zum Umladen des Werkstücks (2,2') auf ein anderes Lastaufnahmemittels (6) eines gleichen oder anderen Typs (A,B,C,D) ausgebildet ist und dass
- die Fertigungsmittel (28,29) als Industrieroboter ausgebildet sind.

2. Fertigungsanlage nach Anspruch 1, **dadurch gekennzeichnet, dass** das Fertigungsmittel (29) austauschbare applikationsspezifische Werkzeuge (8) für die Durchführung des jeweiligen Fertigungsprozesses aufweist, die z.B. als Fügewerkzeug, Umformwerkzeug oder dgl. ausgebildet sind.

3. Fertigungsanlage nach Anspruch 1 oder 2, **dadurch gekennzeichnet, dass** die Fertigungsanlage (1) mindestens eine Fertigungseinrichtung (18-22) aufweist, die zur Aufnahme von zwei oder mehr verschiedenartigen Lastaufnahmemitteln (6) mit Werkstücken (2,2') oder Werkstückteilen in einer vorgegebenen Sequenz und zum Anheben und Umladen eines Werkstücks (2) von einem Lastaufnahmemittel (6) auf ein ein anderes Lastaufnahmemittel (6) eingerichtet ist.

4. Fertigungsanlage nach einem der Ansprüche 1 bis 3, **dadurch gekennzeichnet, dass** die Fertigungsanlage (1) eine Fördereinrichtung (4) aufweist, welche ausgelegt ist, zumindest einen Typ, insbesondere alle Typen (A,B,C,D), von Lastaufnahmemitteln (6) zu und von der Fertigungseinrichtung (18-22) zu verlagern, wobei die Fördereinrichtung (4) zumindest ein Fördermittel (5) aufweist, welches als autonomes Fahrzeug (FTF oder AGV) oder als Flurförderfahrzeug ausgebildet ist.

5. Fertigungsanlage nach Anspruch 4, **dadurch gekennzeichnet, dass** die Lastaufnahmemittel (6) zur Aufnahme eines applikationsspezifischen Werkzeugs (8) ausgebildet sind, wobei die Fertigungsanlage (1) eine an die Fördereinrichtung (4) angeschlossene Bereitstellung (11) für applikationsspezifische Werkzeuge (8) aufweist.

6. Fertigungsanlage nach einem der Ansprüche 1 bis 5, **dadurch gekennzeichnet, dass** die Fertigungsanlage (1) eine Anlagensteuerung (13) mit zumindest einer als Warehouse-Manager ausgebildeten Steuereinheit (14) aufweist, wobei der Warehouse-Manager (14) den Aufenthalt und die Verlagerung der Lastaufnahmemittel (6) bzw. die Fördereinrichtung (4) steuert.

7. Fertigungsanlage nach einem der Ansprüche 1 bis 6, **dadurch gekennzeichnet, dass** die Fertigungsanlage (1) eine Anlagensteuerung (13) mit zumindest einer als Toolstore-Manager ausgebildeten Steuereinheit (15) aufweist, wobei der Toolstore-Manager (15) die Speicherung der Steuerungsprogramme (40) in den Steuereinrichtungen (38) der einzelnen Fertigungseinrichtungen (18-22) und/oder die Ausstattung der einzelnen Fertigungseinrichtungen (18-22) bzw. Fertigungsmittel (28,29) mit applikationsspezifischen Werkzeugen (8) steuert.

8. Fertigungsanlage nach Anspruch 7, **dadurch gekennzeichnet, dass** die Steuereinrichtungen (38) der Fertigungseinrichtungen (18-22) mit dem Warehouse-Manager (14) verbunden sind.

9. Fertigungsanlage nach einem der Ansprüche 6 bis 8, **dadurch gekennzeichnet, dass** die Fertigungsanlage (1) dezentral gesteuert ist, wobei die Steuereinrichtungen (38) die Werkstückbearbeitung in den Fertigungseinrichtungen (18-22) eigenständig steuern und Beginn sowie Ende des Bearbeitungsprozesses an den Warehouse-Manager (14) melden, welcher den Fertigungsablauf über die Verlagerung der Lastaufnahmemittel (6) bzw. die Fördereinrichtung (4) steuert.

10. Fertigungsanlage nach einem der Ansprüche 1 bis 9, **dadurch gekennzeichnet, dass** eine Fertigungseinrichtung (18-22) für einen Primärprozess mit einer weiteren Fertigungseinrichtung (67) für einen Sekundärprozess an einem Werkstück (2) verbunden ist.

11. Verfahren zum Bearbeiten von Werkstücken (2,2'), insbesondere Karosseriebauteilen, in einer Fertigungsanlage (1) mit mindestens einer automatischen Fertigungseinrichtung (18-22), die zumindest ein programmgesteuertes Fertigungsmittel (28,29) und einen Bearbeitungsbereich (26) aufweist, **dadurch gekennzeichnet, dass** das Verfahren folgende Schritte aufweist:
- Verlagern eines ersten von zumindest zwei voneinander verschiedenartigen Lastaufnahmemitteln (6) in einen Bearbeitungsbereich (26) einer ersten Fertigungseinrichtung (18) gemäß mindestens einem der Ansprüche 1 bis 10,
- automatisches Erfassen und Bestimmen des Typs (A,B,C,D) des ersten Lastaufnahmemittels (6),
- automatische Auswahl eines dem bestimmten Typs (A,B,C,D) zugeordneten Steuerungsprogramms (40) für das zumindest eine Fertigungsmittel (28,29) aus einer Vielzahl von Steuerungsprogrammen,
- automatisches Ausführen des ausgewählten Steuerungsprogramms (40),
- schwebendes Halten eines Werkstücks (2,2') beim Bearbeitungsprozess und Umladen des Werkstücks (2,2') auf ein anderes Lastaufnahmemittel (6) eines gleichen oder anderen Typs (A,B,C,D) durch ein an dem Bearbeitungsbereich (26) angeordnetes Fertigungsmittel (28,29).

12. Verfahren nach Anspruch 11 mit folgenden Schritten:
- Aufnehmen des Werkstückes (2) durch zumindest ein Fertigungsmittel (28,29) von einem ersten Lastaufnahmemittel (6),
- Verlagern des ersten Lastaufnahmemittels (6) aus dem Bearbeitungsbereich (26) der ersten Fertigungseinrichtung (18),
- Verlagern eines zweiten Lastaufnahmemittels (6), welches von dem ersten Lastaufnahmemittel (6) verschiedenartig ist, in den Bearbeitungsbereich (26) der ersten Fertigungseinrichtung (18),
- Ablegen des Werkstücks (2) auf das zweite Lastaufnahmemittel (6).

13. Verfahren nach Anspruch 11 oder 12 mit folgendem Schritt:
- Verlagern des ersten oder zweiten Lastaufnahmemittels (6) aus dem Bearbeitungsbereich (26) der ersten Fertigungseinrichtung (18) in den Bearbeitungsbereich (26) einer zweiten Fertigungseinrichtung (19).

14. Verfahren nach Anspruch 11, 12 oder 13, **dadurch gekennzeichnet, dass** mit dem zweiten Lastaufnahmemittel (6) ein weiteres Werkstück (2') in den Bearbeitungsbereich der ersten Fertigungseinrichtung (18) gebracht wird.

15. Verfahren nach einem der Ansprüche 11 bis 14, **dadurch gekennzeichnet, dass** in einer Fertigungseinrichtung (18-22) ein Primärprozess und in einer damit verbundenen weiteren Fertigungseinrichtung (67) ein Sekundärprozess an einem Werkstück (2,2') durchgeführt wird.

## Claims

1. Production plant for workpieces (2, 2'), in particular vehicle body components, wherein the production plant (1) has a supply station (10) for workpieces (2, 2') and at least one automatic production device (18-22), which has at least one program-controlled production means (28, 29) and a processing area (26), and the production plant (1) has at least two load-receiving means (6), which are different from one another and each have a type identification (37), wherein the load-receiving means (6) of different types (A, B, C, D) are adapted to different workpieces (2, 2'),
wherein the production device (18-22) also has:
- a processing area (26), which is designed for sequentially receiving at least two load-receiving means (6) which are different from one another,
- a recording device (36), which is designed to record a type identification (37) of one of the load-receiving means (6),
- a control device (38), which is set up to determine the type (A, B, C, D) of the load-receiving means (6) on the basis of the type identification (37) recorded by the recording device (36) and to select and execute a control program (40) for the at least one production means (28, 29) from a multiplicity of control programs on the basis of the type (A, B, C, D) determined,
- wherein a production means (29) is designed for processing a workpiece (2, 2'), **characterized in that**,
- at the processing area (26) there is a production means (28, 29), which is designed for holding a workpiece (2, 2') in a suspended state during the processing process and for transferring the workpiece (2, 2') to another load-receiving means (6) of a same or different type (A, B, C, D) and **in that**
- the production means (28, 29) are designed as industrial robots.

2. Production plant according to Claim 1, **characterized in that** the production means (29) has exchangeable application-specific tools (8) for carrying out the respective production process, which are designed for example as a joining tool, shaping tool or the like.

3. Production plant according to Claim 1 or 2, **characterized in that** the production plant (1) has at least one production device (18-22), which is set up for receiving two or more different types of load-receiving means (6) with workpieces (2, 2') or workpiece parts in a specified sequence and for raising and transferring a workpiece (2) from one load-receiving means (6) to another load-receiving means (6).

4. Production plant according to one of Claims 1 to 3, **characterized in that** the production plant (1) has a conveying device (4), which is designed to displace at least one type, in particular all types (A, B, C, D), of load-receiving means (6) to and from the production device (18-22), wherein the conveying device (4) has at least one conveying means (5), which is designed as an autonomous vehicle (FTF or AGV) or as an industrial truck.

5. Production plant according to Claim 4, **characterized in that** the load-receiving means (6) are designed for receiving an application-specific tool (8), wherein the production plant (1) has a supply station (11) for application-specific tools (8) that is connected to the conveying device (4).

6. Production plant according to one of Claims 1 to 5, **characterized in that** the production plant (1) has a plant controller (13) with at least one control unit (14) designed as a warehouse manager, wherein the warehouse manager (14) controls the presence and the displacement of the load-receiving means (6) or the conveying device (4).

7. Production plant according to one of Claims 1 to 6, **characterized in that** the production plant (1) has a plant controller (13) with at least one control unit (15) designed as a tool store manager, wherein the tool store manager (15) controls the storing of the control programs (40) in the control devices (38) of the individual production devices (18-22) and/or the equipping of the individual production devices (18-22) or production means (28, 29) with application-specific tools (8).

8. Production plant according to Claim 7, **characterized in that** the control devices (38) of the production devices (18-22) are connected to the warehouse manager (14).

9. Production plant according to one of Claims 6 to 8, **characterized in that** the production plant (1) is decentrally controlled, wherein the control devices (38) independently control the workpiece processing in the production devices (18-22) and announce the beginning and end of the processing process to the warehouse manager (14), which controls the production sequence by way of the displacement of the load-receiving means (6) or the control device (4) .

10. Production plant according to one of Claims 1 to 9, **characterized in that** a production device (18-22) for a primary process is connected to a further production device (67) for a secondary process on a workpiece (2).

11. Method for processing workpieces (2, 2'), in particular vehicle body components, in a production plant (1) with at least one automatic production device (18-22), which has at least one program-controlled production means (28, 29) and a processing area (26), **characterized in that** the method comprises the following steps:
- displacing a first of at least two load-receiving means (6) which are different from one another into a processing area (26) of a first production device (18) according to at least one of Claims 1 to 10,
- automatically recording and determining the type (A, B, C, D) of the first load-receiving means (6),
- automatically selecting a control program (40) assigned to the type (A, B, C, D) determined for the at least one production means (28, 29) from a multiplicity of control programs,
- automatically executing the selected control program (40),
- holding a workpiece (2, 2') in a suspended state during the processing process and transferring the workpiece (2, 2') to another load-receiving means (6) of a same or other type (A, B, C, D) by a production means (28, 29) arranged at the processing area (26).

12. Method according to Claim 11 with the following steps:
- receiving the workpiece (2) by at least one production means (28, 29) from a first load-receiving means (6),
- displacing the first load-receiving means (6) from the processing area (26) of the first production device (18),
- displacing a second load-receiving means (6), which is different from the first load-receiving means (6), into the processing area (26) of the first production device (18),
- setting down the workpiece (2) on the second load-receiving means (6).

13. Method according to Claim 11 or 12 with the following steps:
- displacing the first or second load-receiving means (6) from the processing area (26) of the first production device (18) into the processing area (26) of a second production device (19).

14. Method according to Claim 11, 12 or 13, **characterized in that**, with the second load-receiving means (6), a further workpiece (2') is brought into the processing area of the first production device (18).

15. Method according to one of Claims 11 to 14, **characterized in that** a primary process is carried out in one production device (18-22) and a secondary process is carried out in a further production device (67), connected to said one production device, on a workpiece (2, 2').

## Revendications

1. Installation de fabrication pour des pièces (2, 2'), en particulier des pièces de carrosserie, dans laquelle l'installation de fabrication (1) présente un poste d'approvisionnement (10) pour des pièces (2, 2') et au moins un dispositif de fabrication automatique (18-22) qui présente au moins un moyen de fabrication (28, 29) commandé par programme et une zone d'usinage (26), et l'installation de fabrication (1) présente au moins deux moyens de réception de charge (6) différents l'un de l'autre qui présentent respectivement une identification de type (37),
dans laquelle les moyens de réception de charge (6) de type (A, B, C, D) différent sont adaptés à différentes pièces (2, 2'),
le dispositif de fabrication (18-22) présentant en outre :
- une zone d'usinage (26) qui est conçue pour recevoir séquentiellement au moins deux moyens de réception de charge (6) différents l'un de l'autre,
- un dispositif de détection (36) qui est conçu pour détecter une identification de type (37) d'un des moyens de réception de charge (6),
- un dispositif de commande (38) qui est conçu pour déterminer le type (A, B, C, D) du moyen de réception de charge (6) à l'aide de l'identification de type (37) détectée par le dispositif de détection (36) et pour sélectionner et exécuter un programme de commande (40) pour ledit au moins un moyen de fabrication (28, 29) à l'aide du type (A, B, C, D) déterminé parmi une pluralité de programmes de commande,
- dans laquelle un moyen de fabrication (29) est réalisé pour usiner une pièce (2, 2'),
**caractérisée**
- **en ce qu'**au niveau de la zone d'usinage (26) est disposé un moyen de fabrication (28, 29) qui est réalisé pour maintenir en suspension une pièce (2, 2') lors du processus d'usinage et pour transborder la pièce (2, 2') sur un autre moyen de réception de charge (6) de type (A, B, C, D) identique ou différent, et
- **en ce que** les moyens de fabrication (28, 29) sont réalisés sous forme de robots industriels.

2. Installation de fabrication selon la revendication 1, **caractérisée en ce que** le moyen de fabrication (29) présente des outils (8) échangeables, spécifiques à une application, pour exécuter le processus de fabrication respectif, qui sont réalisés par exemple sous forme d'outils d'assemblage, d'outils de transformation ou similaires.

3. Installation de fabrication selon la revendication 1 ou 2, **caractérisée en ce que** l'installation de fabrication (1) présente au moins un dispositif de fabrication (18-22) qui est aménagé pour recevoir deux ou plusieurs moyens de réception de charge (6) de différents types avec des pièces (2, 2') ou des parties de pièces dans une séquence prédéfinie, et pour soulever et transborder une pièce (2) d'un moyen de réception de charge (6) à un autre moyen de réception de charge (6).

4. Installation de fabrication selon l'une quelconque des revendications 1 à 3, **caractérisée en ce que** l'installation de fabrication (1) présente un dispositif de convoyage (4) qui est conçu pour déplacer au moins un type, en particulier tous les types (A, B, C, D) de moyens de réception de charge (6) à destination et en provenance du dispositif de fabrication (18-22), dans laquelle le dispositif de convoyage (4) présente au moins un moyen de convoyage (5) qui est réalisé sous forme de véhicule autonome (FTF ou AGV) ou de chariot élévateur.

5. Installation de fabrication selon la revendication 4, **caractérisée en ce que** les moyens de réception de charge (6) sont réalisés pour recevoir un outil (8) spécifique à une application, dans laquelle l'installation de fabrication (1) présente un poste d'approvisionnement (11) raccordé au dispositif de convoyage (4) pour des outils (8) spécifiques à une application.

6. Installation de fabrication selon l'une quelconque des revendications 1 à 5, **caractérisée en ce que** l'installation de fabrication (1) présente un poste de commande d'installation (13) comprenant au moins une unité de commande (14) réalisée sous forme de gestionnaire d'entrepôt, le gestionnaire d'entrepôt (14) commandant le séjour et le déplacement des moyens de réception de charge (6) ou du dispositif de convoyage (4).

7. Installation de fabrication selon l'une quelconque des revendications 1 à 6, **caractérisée en ce que** l'installation de fabrication (1) présente un poste de commande d'installation (13) avec au moins une unité de commande (15) réalisée sous forme de gestionnaire d'outillage, le gestionnaire d'outillage (15) commandant le stockage des programmes de commande (40) dans les dispositifs de commande (38) des différents dispositifs de fabrication (18-22), et/ou l'équipement des différents dispositifs de fabrication (18-22) ou des moyens de fabrication (28, 29) avec des outils (8) spécifiques à une application.

8. Installation de fabrication selon la revendication 7, **caractérisée en ce que** les dispositifs de commande (38) des dispositifs de fabrication (18-22) sont reliés au gestionnaire d'entrepôt (14).

9. Installation de fabrication selon l'une quelconque des revendications 6 à 8, **caractérisée en ce que** l'installation de fabrication (1) est commandée de manière décentralisée, dans laquelle les dispositifs de commande (38) commandent de manière autonome l'usinage des pièces dans les dispositifs de fabrication (18-22) et signalent le début ainsi que la fin du processus d'usinage au gestionnaire d'entrepôt (14) qui commande le déroulement de la fabrication par le déplacement des moyens de réception de charge (6) ou du dispositif de convoyage (4).

10. Installation de fabrication selon l'une quelconque des revendications 1 à 9, **caractérisée en ce qu'**un dispositif de fabrication (18-22) pour un processus primaire est relié à un dispositif de fabrication supplémentaire (67) pour un processus secondaire sur une pièce (2).

11. Procédé permettant d'usiner des pièces (2, 2'), en particulier des pièces de carrosserie, dans une installation de fabrication (1) comprenant au moins un dispositif de fabrication automatique (18-22) qui présente au moins un moyen de fabrication (28, 29) commandé par programme et une zone d'usinage (26),
**caractérisé en ce que** le procédé présente les étapes suivantes consistant à :
- déplacer un premier parmi au moins deux moyens de réception de charge (6) de type différent dans une zone d'usinage (26) d'un premier dispositif de fabrication (18) selon au moins l'une des revendications 1 à 10,
- détecter et déterminer automatiquement le type (A, B, C, D) du premier moyen de réception de charge (6),
- sélectionner automatiquement un programme de commande (40) associé au type (A, B, C, D) déterminé pour ledit au moins un moyen de fabrication (28, 29) parmi une pluralité de programmes de commande,
- exécuter automatiquement le programme de commande (40) sélectionné,
- maintenir en suspension une pièce (2, 2') lors du processus d'usinage et transborder la pièce (2, 2') sur un autre moyen de réception de charge (6) de type (A, B, C, D) identique ou différent par un moyen de fabrication (28, 29) disposé dans la zone d'usinage (26) .

12. Procédé selon la revendication 11, comprenant les étapes suivantes consistant à :
- prendre la pièce (2) par au moins un moyen de fabrication (28, 29) sur un premier moyen de réception de charge (6),
- déplacer le premier moyen de réception de charge (6) de la zone d'usinage (26) du premier dispositif de fabrication (18),
- déplacer un deuxième moyen de réception de charge (6) qui est différent du premier moyen de réception de charge (6) dans la zone d'usinage (26) du premier dispositif de fabrication (18),
- déposer la pièce (2) sur le deuxième moyen de réception de charge (6).

13. Procédé selon la revendication 11 ou 12, comprenant l'étape suivante consistant à :
- déplacer le premier ou le deuxième moyen de réception de charge (6) de la zone d'usinage (26) du premier dispositif de fabrication (18) dans la zone d'usinage (26) du deuxième dispositif de fabrication (19) .

14. Procédé selon la revendication 11, 12 ou 13, **caractérisé en ce que** le deuxième moyen de réception de charge (6) amène une pièce supplémentaire (2') dans la zone d'usinage du premier dispositif de fabrication (18) .

15. Procédé selon l'une quelconque des revendications 11 à 14, **caractérisé en ce que** dans un dispositif de fabrication (18-22) un processus primaire est exécuté, et dans un dispositif de fabrication supplémentaire (67) relié à celui-ci un processus secondaire est exécuté sur une pièce (2, 2').
